# EUROPÄISCHE PATENTSCHRIFT

(11) **EP 3 822 021 B1**
(45) Veröffentlichungstag und Bekanntmachung des Hinweises auf die Patenterteilung: **23.10.2024**
(21) Anmeldenummer: 20206935.7
(22) Anmeldetag: 11.11.2020
(51) Int. Cl.: B25B 5/00

(54) **MODULARER ABSTÜTZBOCK**
MODULAR SUPPORT BLOCK
APPUI MODULAIRE

(30) Priorität: 15.11.2019 DE 102019130877
(43) Veröffentlichungstag der Anmeldung: 19.05.2021
(73) Patentinhaber: Andreas Maier GmbH & Co. KG, 70734 Fellbach (DE)
(72) Erfinder: Steinbach, Peter, 71642 Ludwigsburg (DE)
(74) Vertreter: Hoeger, Stellrecht & Partner Patentanwälte mbB

(56) Entgegenhaltungen:
- EP-A1- 0 441 437
- DE-U1- 8 903 660
- US-A- 3 709 479
- US-A- 399 926

## Beschreibung

Die vorliegende Erfindung betrifft einen modularen Abstützbock, welcher ein Abstützmodul, das ein Basisteil und ein relativ zu dem Basisteil höhenverstellbares Kopfteil umfasst, und ein Verlängerungsmodul, auf welches das Abstützmodul aufsetzbar ist, umfasst.

Ein solcher Abstützbock wird als Bestandteil einer Spannanordnung zum Einspannen eines zu bearbeitenden Werkstücks an einer Spannfläche eines Aufspannkörpers verwendet und dient zur Abstützung des einzuspannenden Werkstücks oder eines Spannelements, beispielsweise eines Spanneisens, mittels welchem eine Spannkraft auf das einzuspannende Werkstück übertragen wird.

Bei bekannten Abstützböcken dieser Art wird das Abstützmodul lediglich lose auf das Verlängerungsmodul aufgesteckt. Ein solcher Abstützbock ist mit geringem Aufwand herstellbar, weist aber eine unsichere und instabile Bauweise auf.

Die EP 0 441 437 A1 und die DE 89 03 660 U1 offenbaren modulare Abstützböcke gemäß dem Oberbegriff von Anspruch 1.

Der vorliegenden Erfindung liegt die Aufgabe zugrunde, einen modularen Abstützbock der eingangs genannten Art zu schaffen, welcher eine höhere Sicherheit und mechanische Stabilität aufweist.

Diese Aufgabe wird durch einen modularen Abstützbock nach Anspruch 1 gelöst.

Eine solche Verdrehsicherung kann insbesondere eine Verdrehsicherungsnut und einen mit der Verdrehsicherungsnut in Eingriff bringbaren Verdrehsicherungszapfen umfassen.

Grundsätzlich kann vorgesehen sein, dass die Verdrehsicherungsnut an dem Abstützmodul angeordnet ist und dass der Verdrehsicherungszapfen an dem Verlängerungsmodul angeordnet ist.

Bei einer bevorzugten Ausgestaltung ist jedoch vorgesehen, dass die Verdrehsicherungsnut an dem Verlängerungsmodul angeordnet ist und der Verdrehsicherungszapfen an dem Abstützmodul angeordnet ist.

Besonders günstig ist es, wenn eine weitere Verdrehsicherung vorgesehen ist, mittels welcher ein weiteres Verlängerungsmodul, ein Fußmodul oder ein Sockelelement in einer vorgegebenen Winkelposition in Bezug auf die Längsachse des Abstützbocks relativ zu dem Verlängerungsmodul sicherbar ist.

Durch das weitere Verlängerungsmodul oder durch mehrere weitere Verlängerungsmodule kann die Gesamthöhe des modularen Abstützbocks in gewünschter Weise gewählt werden.

Mittels eines Fußmoduls oder eines Sockelelements ist der Abstützbock in sicherer und mechanisch stabiler Weise mit einem Aufspannkörper montierbar.

Vorzugsweise ist die weitere Verdrehsicherung kompatibel mit der ersten Verdrehsicherung, mittels welcher das erste Verlängerungsmodul in einer vorgegebenen Winkelposition in Bezug auf eine Längsachse des Abstützbocks relativ zu dem Abstützmodul sicherbar ist, ausgebildet, so dass das weitere Verlängerungsmodul, das Fußmodul oder das Sockelelement des Abstützbocks in einer vorgegebenen Winkelposition in Bezug auf die Längsachse des Abstützbocks relativ zu dem Abstützmodul direkt an dem Abstützmodul sicherbar ist.

Auf diese Weise ist es möglich, auf das erste Verlängerungsmodul zu verzichten, wenn ein Abstützbock mit einer geringeren Gesamthöhe benötigt wird.

Durch die Kompatibilität der Verdrehsicherungen des modularen Abstützbocks ist gewährleistet, dass die einzelnen Module des Abstützbocks, insbesondere ein oder mehrere Verlängerungsmodule, ein Fußmodul und/oder ein Sockelelement, in variabler Anzahl und in variabler Reihenfolge miteinander gekoppelt werden können, um einen modularen Abstützbock mit den gewünschten Abmessungen aufzubauen.

Die mechanische Stabilität des modularen Abstützbocks wird dadurch erhöht, dass eine Schraubverbindung vorgesehen ist, mittels welcher das Verlängerungsmodul mit dem Abstützmodul verschraubbar ist.

Diese Schraubverbindung umfasst ein Außengewinde und eine Überwurfmutter.

Grundsätzlich kann vorgesehen sein, dass das Außengewinde an dem Abstützmodul und die Überwurfmutter an dem Verlängerungsmodul angeordnet ist.

Bei einer bevorzugten Ausgestaltung der Erfindung ist jedoch vorgesehen, dass das Außengewinde an dem Verlängerungsmodul und die Überwurfmutter an dem Abstützmodul angeordnet ist.

Besonders günstig ist es, wenn eine weitere Schraubverbindung vorgesehen ist, mittels welcher ein weiteres Verlängerungsmodul, ein Fußmodul oder ein Sockelelement mit dem Verlängerungsmodul verschraubbar ist.

Dabei ist vorzugsweise die weitere Schraubverbindung kompatibel mit der ersten Schraubverbindung ausgebildet, mittels welcher das erste Verlängerungsmodul mit dem Abstützmodul verschraubbar ist, so dass das weitere Verlängerungsmodul, das Fußmodul oder das Sockelelement direkt mit dem Abstützmodul verschraubbar ist.

Hierdurch ist es möglich, das Abstützmodul des modularen Abstützbocks mit einer beliebigen Anzahl von Verlängerungsmodulen und gegebenenfalls auch mit einem Fußmodul oder einem Sockelelement zu einem modularen Abstützbock zusammenzusetzen, welcher die gewünschte Höhe aufweist, wobei die Verlängerungsmodule in beliebiger Reihenfolge aufeinanderfolgen oder auch teilweise oder ganz entfallen können.

Um eine Feineinstellung der Gesamthöhe des modularen Abstützbocks vornehmen zu können, ist es günstig, wenn das Abstützmodul eine Höhenverstellungseinrichtung für das Kopfteil umfasst, wobei die Höhenverstellungseinrichtung eine Gewindespindel und ein Innengewinde sowie optional eine Kontermutter umfasst.

Die Gewindespindel kann insbesondere ein Trapezgewinde aufweisen, vorzugsweise ein metrisches ISO-Trapezgewinde nach der Norm DIN 103-1 vom 4. Januar 1977.

Durch die Ausbildung des Gewindes der Gewindespindel als Trapezgewinde ist eine schnelle Einstellung der Höhe des Kopfteils relativ zu dem Basisteil des Abstützmoduls möglich.

Die Steigung des Trapezgewindes beträgt vorzugsweise mindestens 4 mm, insbesondere mindestens 6 mm, besonders bevorzugt mindestens 7 mm.

Alternativ hierzu kann auch vorgesehen sein, dass die Gewindespindel ein Feingewinde aufweist, insbesondere ein metrisches ISO-Feingewinde nach der Norm DIN 13-2 vom November 1999.

Durch die Ausbildung des Gewindes der Gewindespindel als ein Feingewinde ist auch unter Belastung des Abstützmoduls eine präzise Höhenverstellung des Kopfteils relativ zu dem Basisteil des Abstützmoduls möglich.

Die Steigung des Feingewindes beträgt vorzugsweise höchstens 4 mm, insbesondere höchstens 3 mm, besonders bevorzugt höchstens 2 mm.

Bei einer besonderen Ausgestaltung der Erfindung ist vorgesehen, dass das Abstützmodul ein relativ zu einer Längsachse des Abstützmoduls verschwenkbares Winkelausgleichselement umfasst.

Hierdurch ist es möglich, Abweichungen der Auflegeflächen eines einzuspannenden Werkstücks oder eines Spannelements von einer zu der Spannfläche des Aufspannkörpers parallelen Ausrichtung durch eine Verschwenkung des Winkelausgleichselements auszugleichen.

Bei einer bevorzugten Ausgestaltung der Erfindung ist vorgesehen, dass das Abstützmodul ein Magnetelement umfasst, mittels welchem das Winkelausgleichselement in verschiedenen Winkelpositionen bezüglich der Längsachse des Abstützmoduls an einem Winkelausgleichselementträger des Abstützmoduls gehalten ist.

Dabei kann grundsätzlich vorgesehen sein, dass ein solches Magnetelement an dem Winkelausgleichselement angeordnet ist.

Vorzugsweise ist jedoch vorgesehen, dass das Magnetelement an dem Winkelausgleichselementträger des Abstützmoduls angeordnet ist.

Grundsätzlich kann auch vorgesehen sein, dass ein Magnetelement an dem Winkelausgleichselement angeordnet ist und ein weiteres Element an dem Winkelausgleichselementträger des Abstützmoduls angeordnet ist.

Das Magnetelement ist vorzugsweise als ein Dauermagnet ausgebildet.

Zum Schutz des Gewindes der Gewindespindel vor einer Verunreinigung kann vorgesehen sein, dass das Abstützmodul eine Abdeckung, insbesondere in Form einer Abdeckhülse, umfasst, welche das Gewinde der Gewindespindel - vorzugsweise in jeder Höhenposition des Kopfteils relativ zu dem Basisteil des Abstützmoduls - gegenüber einem Außenraum des Abstützmoduls abschirmt, so dass keine Verunreinigungen, insbesondere keine Späne oder flüssige Verunreinigungen wie Schmierstoffe oder Kühlstoffe, aus dem Außenraum des Abstützmoduls zu dem Gewinde der Gewindespindel gelangen können.

Eine solche Abdeckung des Gewindes der Gewindespindel ist insbesondere dann vorteilhaft, wenn das Gewinde der Gewindespindel als ein Feingewinde ausgebildet ist, welches sonst sehr verschmutzungs- und verschleißanfällig wäre.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine perspektivische Darstellung einer Spannanordnung, mittels welcher ein Werkstück an einer Spannfläche eines Aufspannkörpers eingespannt ist;
- Fig. 2: eine Seitenansicht der Spannanordnung, des Werkstücks und des Aufspannkörpers aus Fig. 1;
- Fig. 3: eine Vorderansicht der Spannanordnung, des Werkstücks und des Aufspannkörpers aus den Fig. 1 und 2, mit der Blickrichtung in Richtung des Pfeiles 3 in Fig. 2;
- Fig. 4: eine Draufsicht auf die Spannanordnung, das Werkstück und den Aufspannkörper aus den Fig. 1 bis 3 von oben, mit der Blickrichtung in Richtung des Pfeiles 4 in Fig. 2;
- Fig. 5: einen Längsschnitt durch einen modularen Abstützbock der Spannanordnung aus den Fig. 1 bis 4, welcher in Fig. 2 ganz rechts dargestellt ist, geschnitten parallel zur Zeichenebene von Fig. 2;
- Fig. 6: einen Längsschnitt durch den modularen Abstützbock aus Fig. 5, geschnitten längs der Linie 6 - 6 in Fig. 5;
- Fig. 7: eine perspektivische Darstellung eines Abstützmoduls des modularen Abstützbocks aus den Fig. 5 und 6;
- Fig. 8: eine Vorderansicht des Abstützmoduls aus Fig. 7;
- Fig. 9: eine Seitenansicht des Abstützmoduls aus den Fig. 7 und 8, mit der Blickrichtung in Richtung des Pfeiles 9 in Fig. 8;
- Fig. 10: einen Längsschnitt durch das Abstützmodul aus den Fig. 7 bis 9;
- Fig. 11: eine Vorderansicht eines Verlängerungsmoduls des modularen Abstützbocks aus den Fig. 5 und 6;
- Fig. 12: einen Längsschnitt durch das Verlängerungsmodul aus Fig. 11, geschnitten senkrecht zur Zeichenebene der Fig. 11;
- Fig. 13: eine perspektivische Darstellung eines Fußmoduls des modularen Abstützbocks aus den Fig. 5 und 6;
- Fig. 14: eine Seitenansicht des Fußmoduls aus Fig. 13;
- Fig. 15: eine Draufsicht auf das Fußmodul aus den Fig. 13 und 14, mit der Blickrichtung in Richtung des Pfeiles 15 in Fig. 14;
- Fig. 16: eine Draufsicht von unten auf das Fußmodul aus den Fig. 13 bis 15, mit der Blickrichtung in Richtung des Pfeiles 16 in Fig. 14;
- Fig. 17: eine perspektivische Darstellung einer weiteren Ausführungsform eines Verlängerungsmoduls eines modularen Abstützbocks;
- Fig. 18: eine Vorderansicht des Verlängerungsmoduls aus Fig. 17;
- Fig. 19: eine Draufsicht von oben auf das Verlängerungsmodul aus den Fig. 17 und 18, mit der Blickrichtung in Richtung des Pfeiles 19 in Fig. 18;
- Fig. 20: einen Längsschnitt durch das Verlängerungsmodul aus den Fig. 17 bis 19, geschnitten längs der Linie 20 - 20 in Fig. 19;
- Fig. 21: eine perspektivische Darstellung eines Multifunktionswerkzeugs für die Montage eines modularen Abstützbocks;
- Fig. 22: eine Draufsicht auf das Multifunktionswerkzeug aus Fig. 21 von oben;
- Fig. 23: eine Seitenansicht des Multifunktionswerkzeugs aus den Fig. 21 und 22, mit der Blickrichtung in Richtung des Pfeiles 23 in Fig. 22;
- Fig. 24: eine perspektivische Darstellung einer alternativen Ausführungsform eines Abstützmoduls, wobei das Abstützmodul eine Höhenverstelleinrichtung für ein Kopfteil des Abstützmoduls umfasst, welche eine Gewindespindel umfasst, die ein Feingewinde aufweist, und wobei das Abstützmodul auf ein Sockelelement aufgesetzt ist;
- Fig. 25: eine Vorderansicht des Abstützmoduls aus Fig. 24;
- Fig. 26: eine Seitenansicht des Abstützmoduls aus den Fig. 24 und 25, mit der Blickrichtung in Richtung des Pfeiles 26 in Fig. 25;
- Fig. 27: einen Längsschnitt durch das Abstützmodul aus den Fig. 24 bis 26, wobei ein Winkelausgleichselement des Abstützmoduls sich in seiner Ausgangsposition befindet, in welcher eine Auflagefläche des Winkelausgleichselements senkrecht zu einer Längsachse des Abstützmoduls ausgerichtet ist;
- Fig. 28: einen der Fig. 27 entsprechenden Längsschnitt durch das Abstützmodul aus den Fig. 24 bis 26, wobei ein Kopfteil des Abstützmoduls relativ zu einem Basisteil des Abstützmoduls längs der Längsachse des Abstützmoduls nach oben bewegt worden ist und das Winkelausgleichselement aus seiner in Fig. 27 dargestellten Ausgangsposition in eine Winkelausgleichsposition ausgelenkt worden ist, in welcher die Normalenrichtung der Auflagefläche des Winkelausgleichselements gegenüber der Längsachse des Abstützmoduls geneigt ist;
- Fig. 29: eine perspektivische Darstellung des Abstützmoduls und des Fußmoduls aus den Fig. 24 bis 28, wobei das Sockelelement mittels eines Adapters mit einem T-Nutenstein in einer T-Nut eines Aufspannkörpers verbunden ist;
- Fig. 30: eine Vorderansicht des Abstützmoduls, des Sockelelements und des Aufspannkörpers aus Fig. 29; und
- Fig. 31: einen Längsschnitt durch das Abstützmodul, das Sockelelement, den Adapter, den T-Nutenstein und den Aufspannkörper aus den Fig. 29 und 30, geschnitten parallel zur Zeichenebene der Fig. 30.

Gleiche oder funktional äquivalente Elemente sind in allen Figuren mit denselben Bezugszeichen bezeichnet.

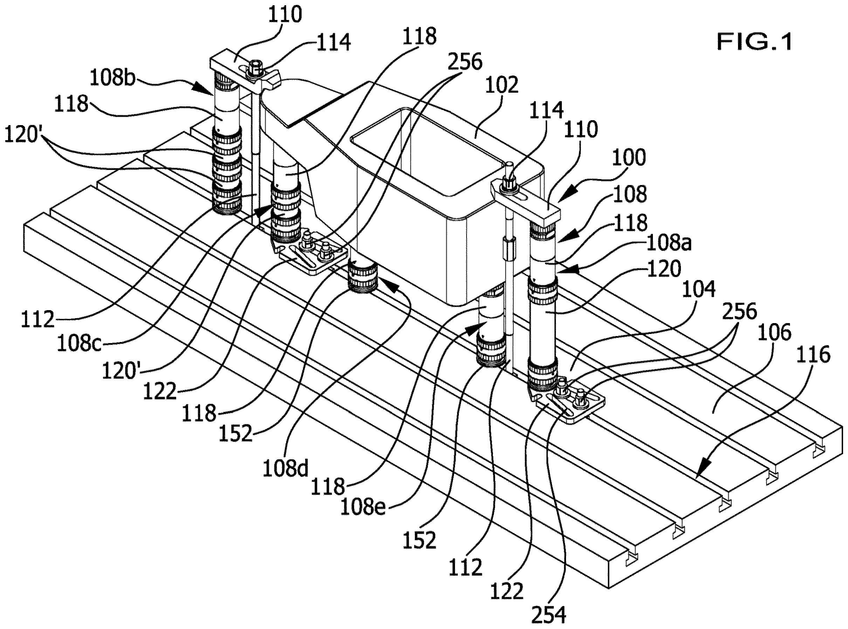

Eine in den Fig. 1 bis 4 dargestellte, als Ganzes mit 100 bezeichnete Spannanordnung dient zum Einspannen eines Werkstücks 102 an einer Spannfläche 104 eines Aufspannkörpers 106.

Der Aufspannkörper 106 kann beispielsweise als ein Maschinentisch oder als eine Spannpalette ausgebildet sein.

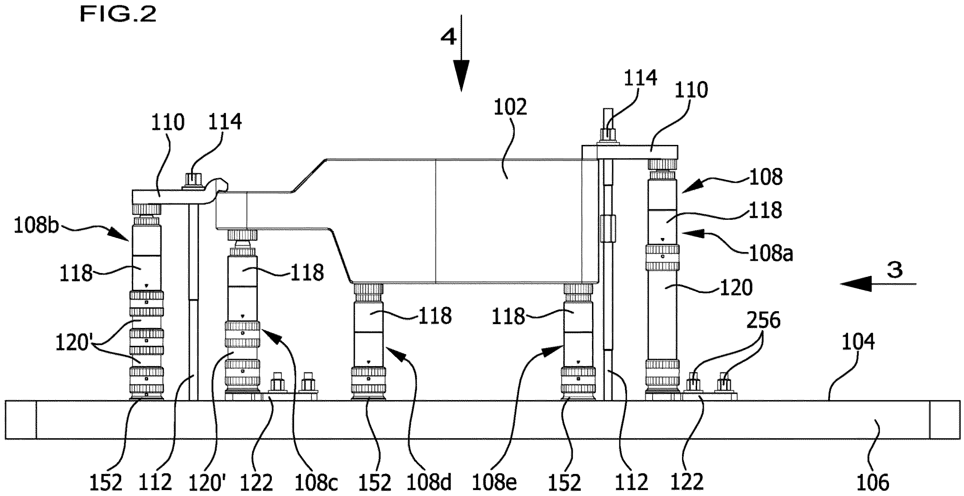

Wie am besten aus der Seitenansicht der Fig. 2 zu ersehen ist, umfasst die Spannanordnung 100 mehrere, beispielsweise zwei, Abstützböcke 108, nämlich einen ersten, in Fig. 2 ganz rechts dargestellten, Abstützbock 108a und einen zweiten in Fig. 2 ganz links dargestellten, Abstützbock 108b, welche jeweils ein Spannelement 110 der Spannanordnung 100 abstützen.

Jedes der Spannelemente, welche beispielsweise als ein Spanneisen ausgebildet sind, liegt an einer der Spannfläche 104 abgewandten Seite des Werkstücks 102 an dem einzuspannenden Werkstück 102 an und wird mittels jeweils einer Zugstange 112 zur Spannfläche 104 hin gezogen.

Dabei wird die Spannkraft mittels jeweils einer Spannmutter 114, die in Eingriff mit einem Gewinde der jeweiligen Zugstange 112 steht, von der Zugstange 112 auf das Spannelement 110 übertragen.

Ein der Spannmutter 114 abgewandtes Ende der Zugstange 112 steht in Eingriff mit jeweils einem T-Nutenstein, der in einer T-Nut 116 des Aufspannkörpers 106 angeordnet ist.

Ferner umfasst die Spannanordnung 100 mehrere, beispielsweise drei, Abstützböcke 108, welche das Werkstück 102 selbst abstützen, nämlich einen in Fig. 2 rechts von dem Abstützbock 108b angeordneten Abstützbock 108c, einen in Fig. 2 rechts von dem Abstützbock 108c angeordneten Abstützbock 108d und einen in Fig. 2 rechts von dem Abstützbock 108d und links von dem Abstützbock 108a angeordneten Abstützbock 108e.

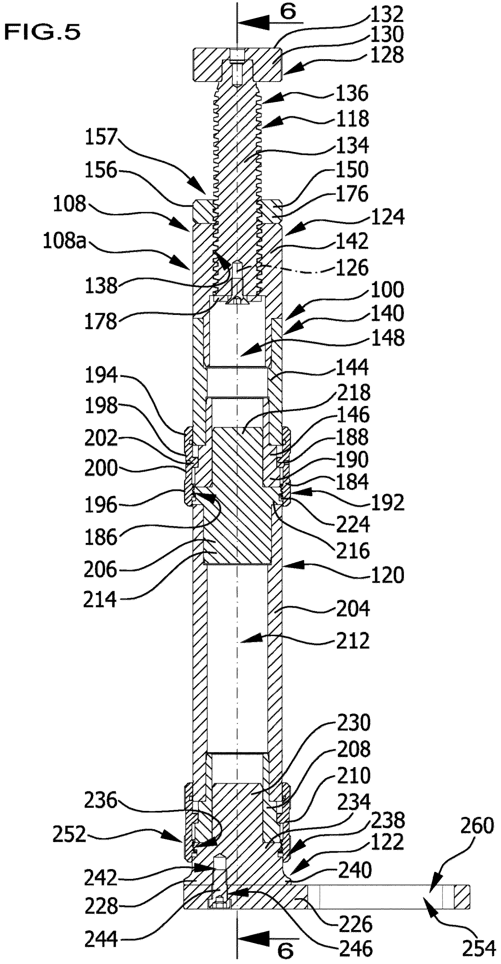

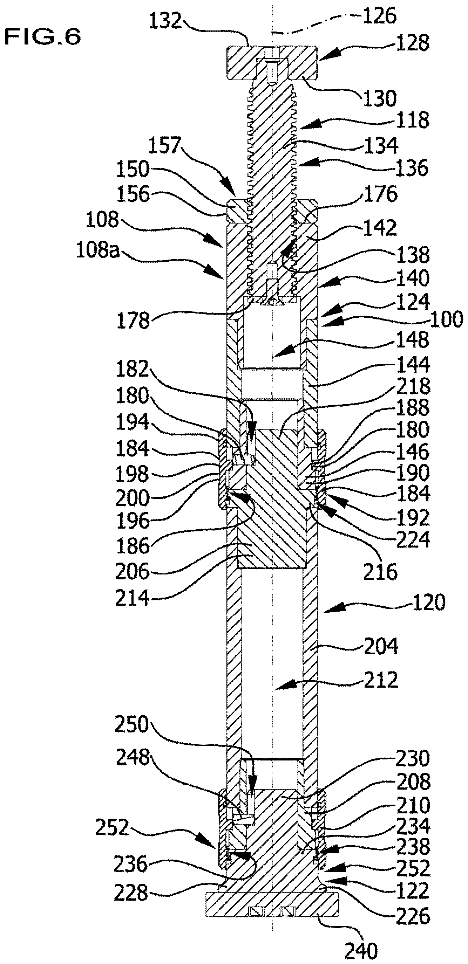

Im Folgenden wird der Aufbau des in Fig. 2 ganz rechts dargestellten Abstützbocks 108a näher erläutert werden, welcher in den Fig. 5 und 6 einzeln im Längsschnitt dargestellt ist.

Der in den Fig. 5 und 6 einzeln dargestellte modulare Abstützbock 108 umfasst ein Abstützmodul 118, ein Verlängerungsmodul 120 und ein Fußmodul 122.

Das Abstützmodul 118 umfasst ein Basisteil 124 und ein relativ zu dem Basisteil 124 längs einer Längsachse 126 des Abstützmoduls 118 und des Abstützbocks 108 höhenverstellbares Kopfteil 128.

Das Kopfteil 128 umfasst ein Auflageelement 130, welches eine Auflagefläche 132 zum Auflegen eines Werkstücks 102 oder eines Spannelements 110 auf das Abstützmodul 118 aufweist.

Das Kopfteil 128 ist, vorzugsweise lösbar, an einer Gewindespindel 134 festgelegt.

Die Festlegung des Kopfteils an der Gewindespindel 134 kann beispielsweise mittels Verschraubung erfolgen.

Das Außengewinde 136 der Gewindespindel 134 greift in ein hierzu komplementär ausgebildetes Innengewinde 138 des Basisteils 124 des Abstützmoduls 118 ein.

Das Außengewinde 136 der Gewindespindel 134 und das Innengewinde 138 des Basisteils 124 sind vorzugsweise jeweils als ein Trapezgewinde ausgebildet, vorzugsweise als ein metrisches ISO-Trapezgewinde nach der Norm DIN 103-1 vom 4. Januar 1977.

Durch die Ausbildung dieser Gewinde als Trapezgewinde ist eine schnelle Einstellung der Höhe des Kopfteils 128 relativ zu dem Basisteil 124 gewährleistet.

Vorzugsweise beträgt die Steigung des Außengewindes 136 der Gewindespindel 134 und/oder die Steigung des Innengewindes 138 des Basisteils 124 mindestens 4 mm, insbesondere mindestens 6 mm, besonders bevorzugt mindestens 7 mm.

Das Basisteil 124 ist als eine im Wesentlichen hohlzylindrische Hülse 140 ausgebildet und umfasst mehrere Teile, beispielsweise ein Oberteil 142, an dem das Innengewinde 138 ausgebildet ist, ein auf der dem Kopfteil 128 abgewandten Seite des Oberteils 142 angeordnetes Zwischenteil 144 und ein auf der dem Oberteil 142 abgewandten Seite des Zwischenteils 144 angeordnete Unterteil 146.

Das Oberteil 142, das Zwischenteil 144 und das Unterteil 146 des Basisteils 124 umschließen zusammen einen Innenraum 148 des Basisteils 124, welcher einen unteren Endbereich der Gewindespindel 134 aufnimmt, wenn das Kopfteil 128 durch Eindrehen des Außengewindes 136 der Gewindespindel 134 in das Innengewinde 138 des Basisteils 124 längs der Längsachse 126 des Abstützmoduls 118 nach unten bewegt wird.

Wenn das Kopfteil 128 die gewünschte Höhe erreicht hat, wird es in dieser Position durch Anziehen einer Kontermutter 150 gegen das Basisteil 124 gesichert.

Die Gewindespindel 154, das Innengewinde 138 des Basisteils 124 und die Kontermutter 150 bilden somit Bestandteile einer Höhenverstellungseinrichtung 157 des Abstützmoduls 118, mittels welcher die Höhenposition des Kopfteils 128 relativ zu dem Basisteil 124 einstellbar ist.

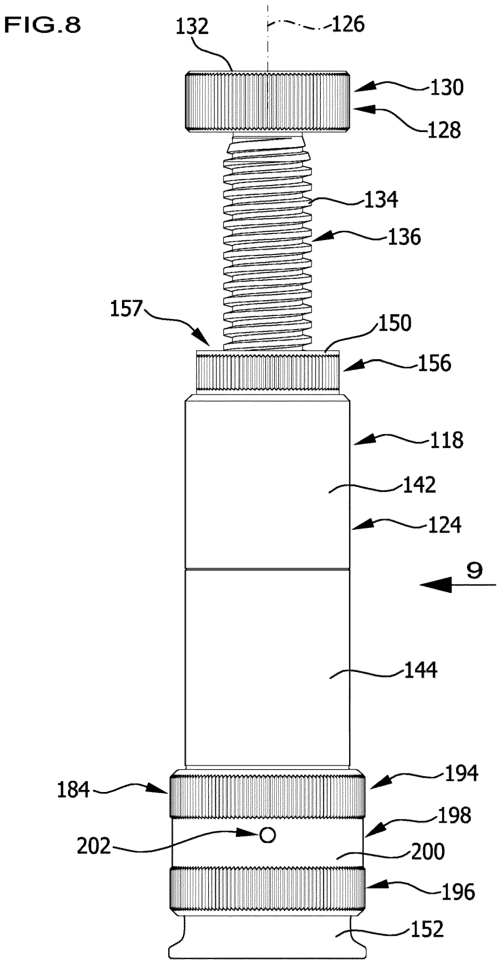

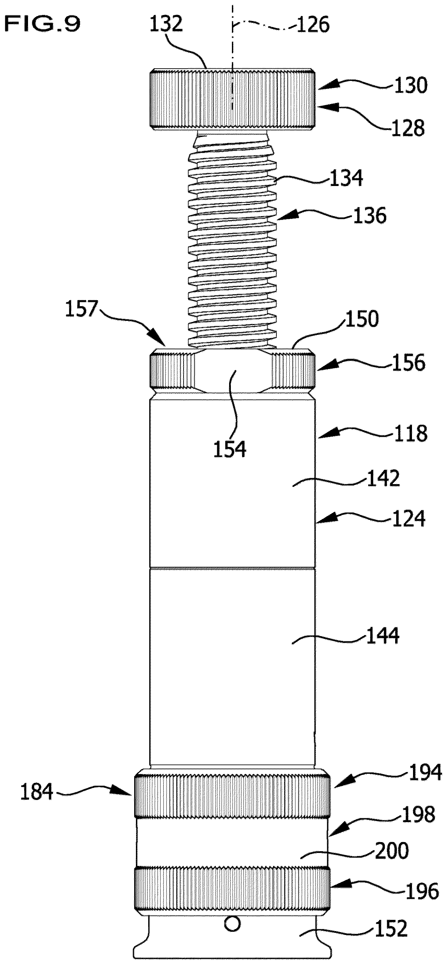

Wie am besten aus den Fig. 8 und 9 zu ersehen ist, die das Abstützmodul 118 zusammen mit einem Sockelelement 152 zeigen, welches das Abstützmodul 118 trägt, weist die Kontermutter 150 zwei einander diametral gegenüberliegende, im Wesentlichen ebene und parallel zueinander ausgerichtete Betätigungsflächen 154 auf, an denen ein geeignetes Werkzeug angreifen kann, um die Kontermutter 150, welche in Eingriff mit dem Außengewinde 136 der Gewindespindel 134 steht, um die Längsachse 126 des Abstützmoduls 118 zu drehen.

Die Kontermutter 150 ist somit als ein Zweiflach ausgebildet.

Zwischen den Betätigungsflächen 154 ist die Kontermutter 150 längs ihres Umfangs mit einer Riffelung 156 versehen.

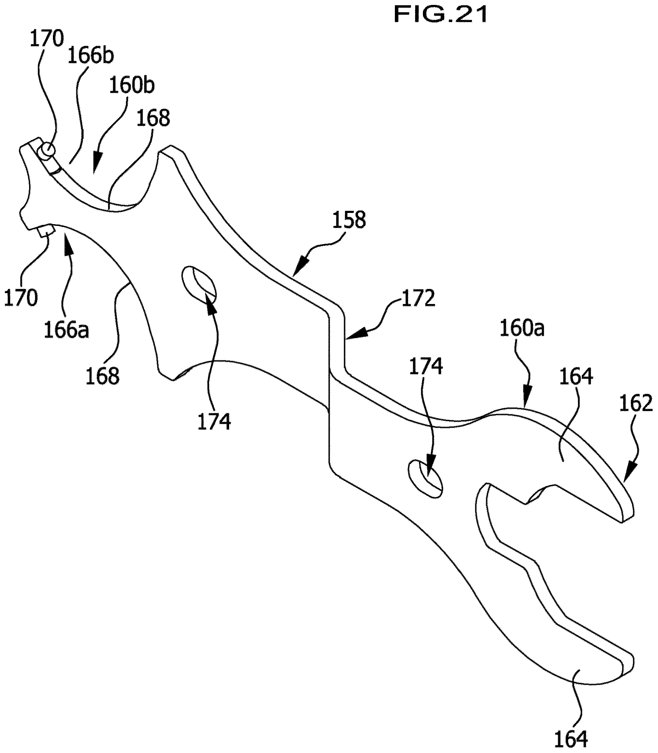

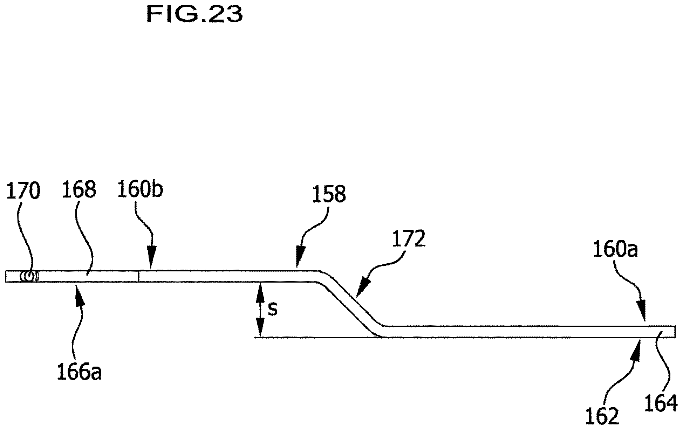

Die Betätigung der Kontermutter 150 kann beispielsweise mittels eines in den Fig. 21 bis 23 dargestellten Multifunktionswerkzeugs 158 erfolgen.

Ein erster Endbereich 160a des Multifunktionswerkzeugs 158 ist als ein Gabelschlüsselbereich 162 ausgebildet. Der Abstand a zwischen den beiden Backen 164 des Gabelschlüsselbereichs 162 entspricht dem Abstand zwischen den beiden Betätigungsflächen 154 der Kontermutter 150, so dass der Gabelschlüsselbereich 162 an den Betätigungsflächen 154 der Kontermutter 150 angesetzt werden kann, um die Kontermutter 150 um die Längsachse 126 des Abstützmoduls 118 zu drehen.

Ein dem ersten Endbereich 160a abgewandter zweiter Endbereich 160b des Multifunktionswerkzeugs 158 umfasst zwei Hakenschlüsselbereiche 166a und 166b.

Jeder der Hakenschlüsselbereiche 166a, 166b umfasst einen Bogenbereich 168, welcher komplementär zu einem Kreisscheibensegment mit dem Durchmesser D ausgebildet ist, und einen an einem Endbereich des Bogenabschnittes 168 angeordneten Zapfen 170.

Diese Hakenschlüsselbereiche 166a, 166b können dazu verwendet werden, das Abstützmodul 118 mit dem Verlängerungsmodul 120 und/oder das Verlängerungsmodul 120 mit dem Fußmodul 122 des Abstützbocks 108 zu verschrauben, was später noch näher erläutert werden wird.

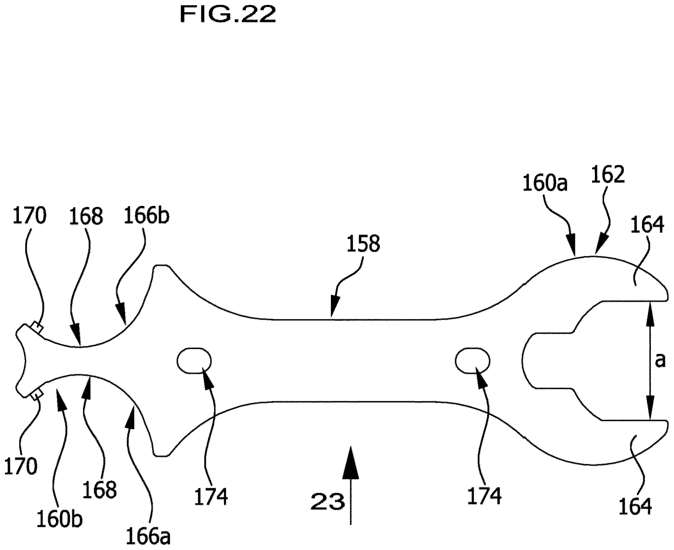

Wie am besten aus den Fig. 21 und 22 zu ersehen ist, sind der erste Endbereich 160a und der zweite Endbereich 160b des Multifunktionswerkzeugs 158 durch eine Abkröpfung 172 miteinander verbunden, so dass der zweite Endbereich 160b um die Strecke s gegenüber dem ersten Endbereich 160a versetzt ist.

Durch diesen Versatz s ist es möglich, das Multifunktionswerkzeug 158 auch dann einzusetzen, wenn die Platzverhältnisse um den Abstützbock 108 herum beengt sind.

Ferner kann das Multifunktionswerkzeug 158 eine oder mehrere, beispielsweise zwei, Durchtrittsöffnungen 174 aufweisen, welche es ermöglichen, das Multifunktionswerkzeug 158 zur Lagerung an einem Stift oder an einem Haken einzuhängen.

Nach dem Anziehen der Kontermutter 150 gegen das Basisteil 124 des Abstützmoduls 118 ist das Kopfteil 128 in seiner Höhenposition relativ zu dem Basisteil 124 gesichert (siehe Fig. 5 und 6).

Das Innengewinde 138 des Basisteils 124 ist an einem Gewindeloch ausgebildet, das sich von einer oberen Stirnfläche 176 des Oberteils 142 des Basisteils 124 längs der Längsachse 126 nach unten erstreckt und im Innenraum 148 des Basisteils 124 mündet.

Eine an dem unteren Ende der Gewindespindel 134 angeordnete Anschlagscheibe 178 verhindert, dass die Gewindespindel 134 bei der Höhenverstellung des Kopfteils 128 relativ zu dem Basisteil 124 aus dem Innengewinde 138 des Basisteils 124 herausgedreht wird.

Das Oberteil 142 und das Zwischenteil 144 des Basisteils 124 sind vorzugsweise unlösbar miteinander verbunden, beispielsweise durch Verpressung, durch Verklebung, durch Verschweißung oder durch Verlötung.

Das Unterteil 146 und das Zwischenteil 144 des Basisteils 124 sind vorzugsweise unlösbar miteinander verbunden, beispielsweise durch Verpressung, durch Verklebung, durch Verschweißung oder durch Verlötung.

An dem Unterteil 146 des Basisteils 124 ist ein radial zu der Längsachse 126 in den Innenraum 148 des Basisteils 124 vorstehender Verdrehsicherungszapfen 180 angeordnet, der einen Teil einer Verdrehsicherung 182 bildet, welche das Verlängerungsmodul 120 in einer vorgegebenen Winkelposition relativ zu dem Abstützmodul 118 (in Bezug auf die gemeinsame Längsachse des Abstützmoduls 118, des Verlängerungsmoduls 120 und des Abstützbocks 108) sichert.

Ferner ist am unteren Ende des Basisteils 124 eine Überwurfmutter 184 angeordnet, welche einen Teil des Zwischenteils 144 und einen Teil des Unterteils 146 des Basisteils 124 überdeckt und nach unten über das untere Ende des Unterteils 146 des Basisteils 124 übersteht. In diesem überstehenden Bereich ist die Überwurfmutter 184 mit einem Innengewinde 186 versehen.

Oberhalb des Innengewindes 186 ist die Überwurfmutter 184 mit einem Ringbund 188 versehen, welcher radial nach innen vorsteht und in einen Zwischenraum zwischen einem unteren Ende des Zwischenteils 144 des Basisteils 124 einerseits und einem verdickten unteren Endbereich 190 des Unterteils 146 des Basisteils 124 andererseits eingreift, so dass die Überwurfmutter 184 unverlierbar, aber längs der Längsachse 126 relativ zu dem Basisteil 124 verschiebbar an dem Basisteil 124 gehalten ist.

Die Überwurfmutter 184 bildet einen Bestandteil einer Schraubverbindung 192, mittels welcher das Abstützmodul 118 mit dem Verlängerungsmodul 120 des Abstützbocks 108 verschraubbar ist.

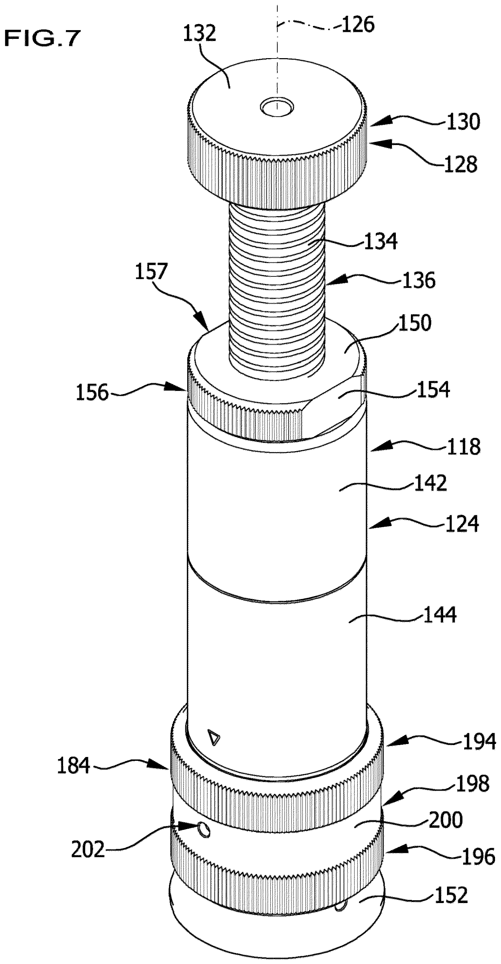

Wie am besten aus den Fig. 7 bis 9 zu ersehen ist, weist die Überwurfmutter 184 an ihrem äußeren Umfang einen dem Kopfteil 128 des Abstützmoduls 118 zugewandten oberen geriffelten Bereich 194, einen dem Kopfteil 128 abgewandten unteren geriffelten Bereich 196 und einen zwischen dem oberen geriffelten Bereich 194 und dem unteren geriffelten Bereich 196 angeordneten Betätigungsbereich 198 auf.

Der Betätigungsbereich 198 weist eine im Wesentlichen glatte zylindrische Oberfläche 200 mit einem Durchmesser D auf.

Der Durchmesser D der glatten Oberfläche 200 des Betätigungsbereichs 198 der Überwurfmutter 184 entspricht dem Durchmesser D der Bogenabschnitte 168 der Hakenschlüsselbereiche 166a und 166b des in den Fig. 21 bis 23 dargestellten Multifunktionswerkzeugs 158.

Jeder der Hakenschlüsselbereiche 166a, 166b des Multifunktionswerkzeugs 158 kann daher in Eingriff mit der Überwurfmutter 184 gebracht werden, indem der Zapfen 170 des jeweiligen Hakenschlüsselbereichs 166a beziehungsweise 166b in eine hierzu komplementär ausgebildete Ausnehmung 202, die in dem Betätigungsbereich 198 der Überwurfmutter 184 angeordnet ist, eingesetzt wird und der an den Zapfen 170 angrenzende Bodenabschnitt 168 des jeweiligen Hakenschlüsselbereichs 166a, 166b an die glatte Oberfläche 200 des Betätigungsbereichs 198 angelegt wird.

Nachdem der jeweilige Hakenschlüsselbereich 166a beziehungsweise 166b in Eingriff mit dem Betätigungsbereich 198 der Überwurfmutter 184 gebracht worden ist, kann die Überwurfmutter 184 mittels des Multifunktionswerkzeugs 158 um die Längsachse 126 des Abstützmoduls 118 gedreht werden, um eine Verschraubung des Abstützmoduls 118 mit dem Verlängerungsmodul 120 zu bewirken, was nachstehend noch näher erläutert werden wird.

Beide Hakenschlüsselbereiche 166a und 166b können jeweils in zwei verschiedenen Orientierungen in Bezug auf die Ausnehmung 202 des Betätigungsbereichs 198 an den Betätigungsbereich 198 angelegt werden. Die Auswahl des anzulegenden Hakenschlüsselbereichs 166a oder 166b und die Auswahl der Orientierung, in welcher der jeweils ausgewählte Hakenschlüsselbereich 166a oder 166b an den Betätigungsbereich 198 der Überwurfmutter 184 angelegt wird, wird unter Berücksichtigung der Abkröpfung 172 des Multifunktionswerkzeugs 158 in Abhängigkeit von den Platzverhältnissen in der Umgebung des zu montierenden Abstützbocks 108 ausgewählt.

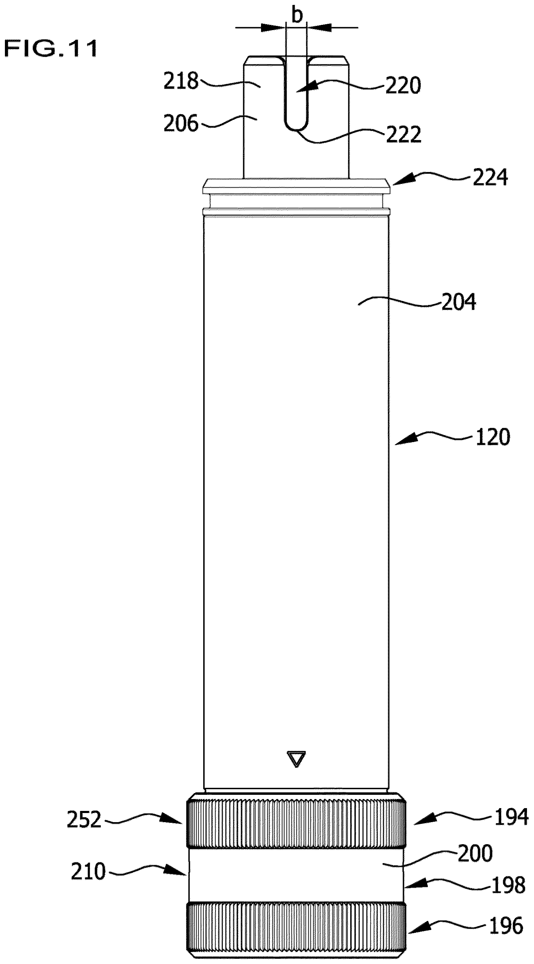

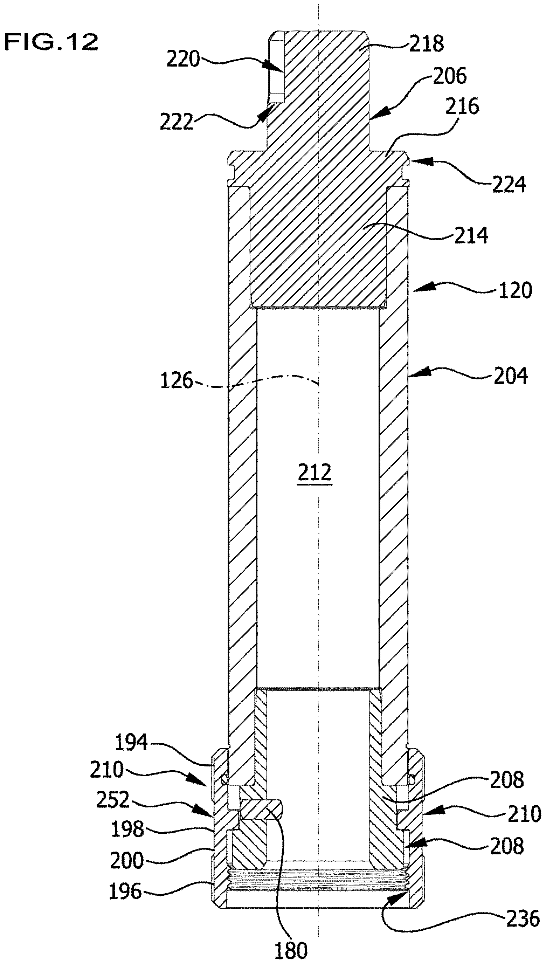

Das mit dem vorstehend beschriebenen Abstützmodul 118 zu koppelnde Verlängerungsmodul 120 ist einzeln in den Fig. 11 und 12 dargestellt.

Das Verlängerungsmodul 120 umfasst ein im Wesentlichen hohlzylindrisch ausgebildetes Hülsenteil 204, ein an einem oberen Ende des Hülsenteils 204 angeordnetes Kopplungsteil 206, ein an einem unteren Ende des Hülsenteils 204 angeordnetes Unterteil 208, welches vorzugsweise genau so aufgebaut ist wie das Unterteil 146 des Abstützmoduls 118, und eine das Hülsenteil 204 und das Unterteil 208 des Verlängerungsmoduls 120 teilweise überdeckende Überwurfmutter 210, welche vorzugsweise genau so ausgebildet ist wie die Überwurfmutter 184 des Abstützmoduls 118 und somit in derselben Weise wie die Überwurfmutter 184 des Abstützmoduls 118 mittels der Hakenschlüsselbereiche 166a, 166b des Multifunktionswerkzeugs 158 betätigt werden kann.

Das Hülsenteil 204 und das Unterteil 208 des Verlängerungsmoduls 120 umschließen gemeinsam einen Innenraum 212 des Verlängerungsmoduls 120.

Der Innenraum 212 wird an seinem oberen Ende durch das Kopplungsteil 206 verschlossen, welches vorzugsweise in einen oberen Endbereich des Hülsenteils 204 eingesetzt ist.

Das Kopplungsteil 206 ist vorzugsweise unverlierbar mit dem Hülsenteil 204 verbunden, beispielsweise durch Verpressung, durch Verklebung, durch Verschweißung oder durch Verlötung.

Das Kopplungsteil 206 umfasst einen in das Hülsenteil 204 eingesetzten Halteabschnitt 214, einen sich nach oben an den Halteabschnitt 214 anschließenden Gewindeabschnitt 216, welcher einen größeren Außendurchmesser aufweist als der Halteabschnitt 214, und einen auf der dem Halteabschnitt 214 abgewandten Seite des Gewindeabschnitts 216 angeordneten Verdrehsicherungsabschnitt 218, welcher einen kleineren Außendurchmesser aufweist als der Gewindeabschnitt 216.

Der Verdrehsicherungsabschnitt 218 weist an seinem Umfang eine in Axialrichtung, das heißt parallel zur Längsachse 126 des Verlängerungsmoduls 120, verlaufende Verdrehsicherungsnut 220 auf, deren Nutbreite b im Wesentlichen dem Durchmesser des Verdrehsicherungszapfens 180 des Abstützmoduls 118 entspricht.

Bei der Montage des Abstützbocks 108 wird der Verdrehsicherungsabschnitt 218 des Kopplungsteils 206 des Verlängerungsmoduls 120 so in den Innenraum 148 des Abstützmoduls 118 eingeführt, dass der Verdrehsicherungszapfen 180 des Abstützmoduls 118 in Eingriff mit der Verdrehsicherungsnut 220 des Verlängerungsmoduls 120 kommt.

Wenn der Verdrehsicherungsabschnitt 218 vollständig in den Innenraum 148 des Abstützmoduls 118 eingeführt ist, liegt der Verdrehsicherungszapfen 180 des Abstützmoduls 118 vorzugsweise an einem unteren Rand 222 der Verdrehsicherungsnut 220 an.

In diesem Zustand ist das Verlängerungsmodul 120 mittels der durch den Verdrehsicherungszapfen 180 des Abstützmoduls 118 und die Verdrehsicherungsnut 220 des Verlängerungsmoduls 120 gebildete Verdrehsicherung 182 in einer vorgegebenen Winkelposition in Bezug auf die gemeinsame Längsachse 126 des Abstützmoduls 118 und des Verlängerungsmoduls 120 relativ zu dem Abstützmodul 118 gesichert.

In dieser Winkelposition ist das Verlängerungsmodul 120 lösbar mit dem Abstützmodul 118 verbindbar mittels der Schraubverbindung 192, welche zusätzlich zu der Überwurfmutter 184 des Abstützmoduls 118 ein zu dem Innengewinde 186 der Überwurfmutter 184 komplementäres Außengewinde 224 am äußeren Umfang des Gewindeabschnitts 216 des Kopplungsteils 206 des Verlängerungsmoduls 120 umfasst.

Durch eine Drehung der Überwurfmutter 184 um die Längsachse 126 des Abstützmoduls 118 und des Verlängerungsmoduls 120, beispielsweise mittels eines der Hakenschlüsselbereiche 166a oder 166b des Multifunktionswerkzeugs 158, ist die Überwurfmutter 184 des Abstützmoduls 118 auf das Außengewinde 224 des Verlängerungsmoduls 120 aufschraubbar, um das Verlängerungsmodul 120 mit dem Abstützmodul 118 zu verschrauben.

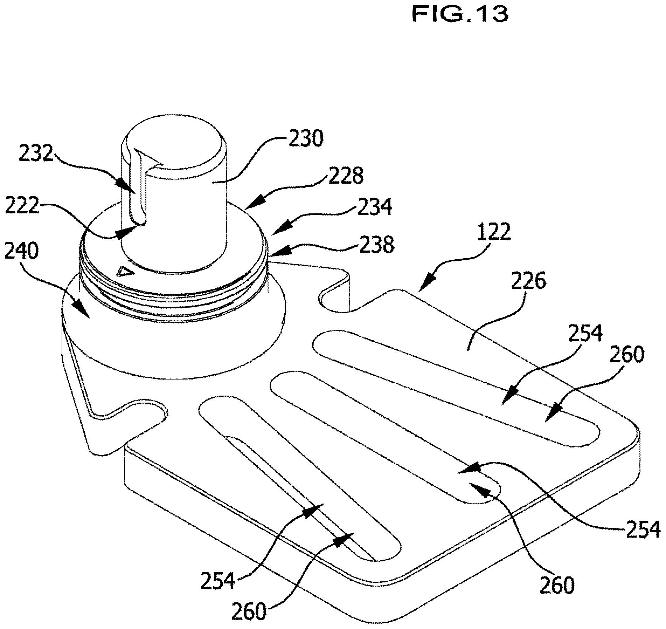

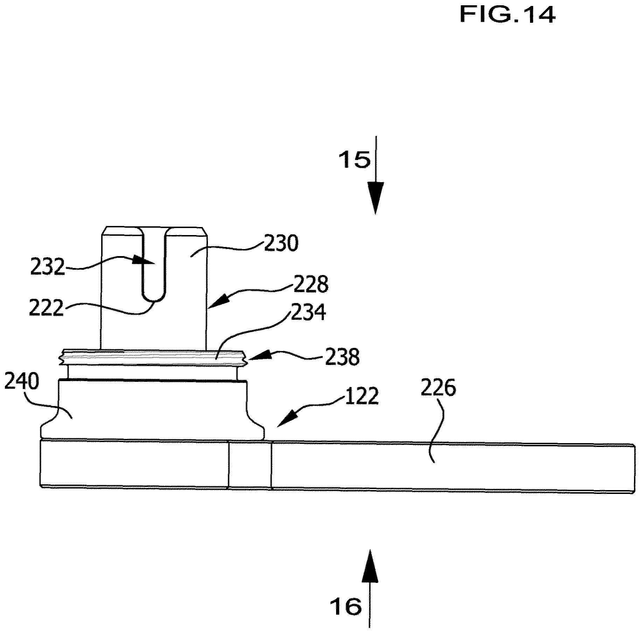

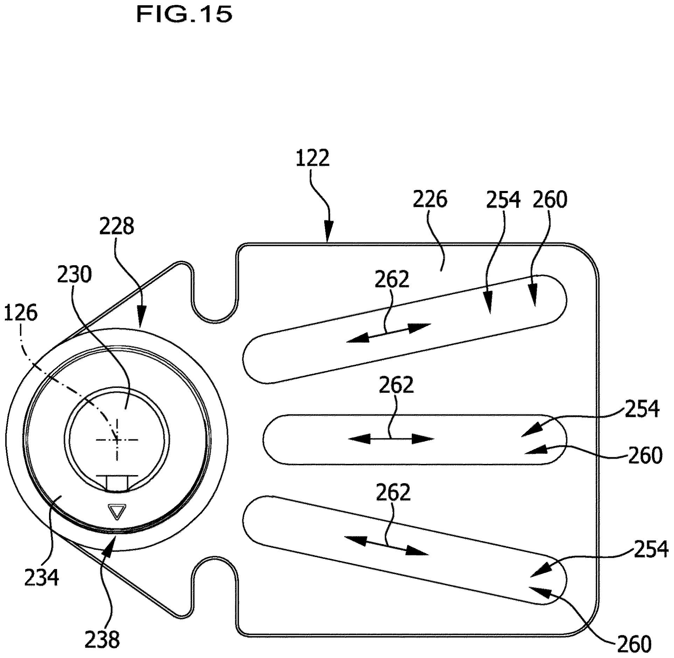

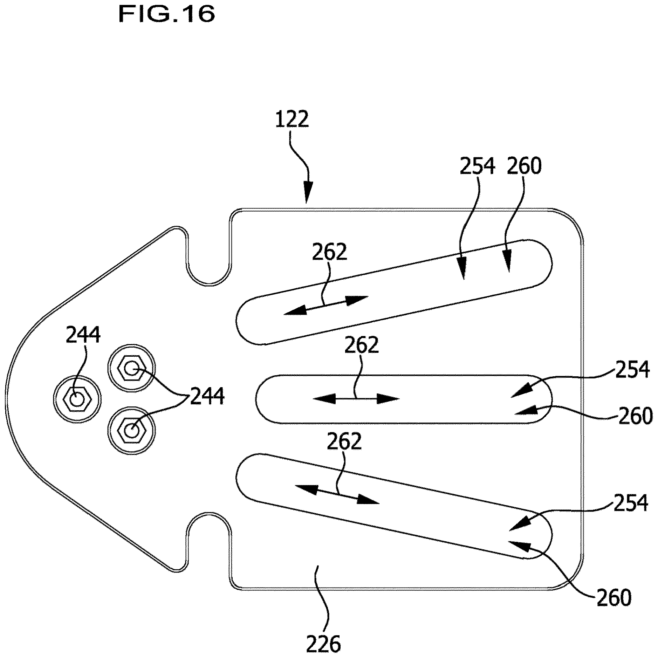

Das Fußmodul 122 des in den Fig. 5 und 6 dargestellten Abstützbocks 108 ist in den Fig. 13 bis 16 einzeln dargestellt und umfasst eine auf den Aufspannkörper 106 auflegbare Basisplatte 226 sowie ein von der Basisplatte 226 getragenes Sockelelement 228.

Das Sockelelement 228 umfasst einen Verdrehsicherungsabschnitt 230, welcher vorzugsweise genau so ausgebildet ist wie der Verdrehsicherungsabschnitt 218 des Kopplungsteils 206 des Verlängerungsmoduls 120.

Der Verdrehsicherungsabschnitt 230 weist eine in axialer Richtung verlaufende Verdrehsicherungsnut 220 der Breite b auf.

An den Verdrehsicherungsabschnitt 230 des Sockelelements 228 schließt sich nach unten, das heißt in Richtung auf die Basisplatte 226 hin, ein Gewindeabschnitt 234 des Sockelelements 228 an, welcher vorzugsweise im Wesentlichen genau so ausgebildet ist wie der Gewindeabschnitt 216 des Kopplungsteils 206 des Verlängerungsmoduls 120.

Der Gewindeabschnitt 234 des Sockelelements 228 weist insbesondere ein zu einem Innengewinde 236 der Überwurfmutter 210 des Verlängerungsmoduls 120 komplementäres Außengewinde 238 auf.

An den Gewindeabschnitt 234 des Sockelelements 228 schließt sich nach unten, das heißt zur Basisplatte 226 hin, ein Verbindungsabschnitt 240 des Sockelelements 228 an, mittels welchem das Sockelelement 228 - vorzugsweise lösbar - mit der Basisplatte 226 verbindbar ist.

Zu diesem Zweck kann der Verbindungsabschnitt 240 eines oder mehrere Gewindesacklöcher 242 (siehe Fig. 5) aufweisen, in welche jeweils eine Befestigungsschraube 244 einschraubbar ist, die eine gestufte Durchtrittsöffnung 246 in der Basisplatte 226 durchsetzt.

Die Montage des Fußmoduls 122 an dem Verlängerungsmodul 120 des Abstützbocks 108 erfolgt dadurch, dass der Verdrehsicherungsabschnitt 230 des Sockelelements 228 des Fußmoduls 122 so in den Innenraum 212 des Verlängerungsmoduls 120 eingeführt wird, dass der Verdrehsicherungszapfen 248 am Unterteil 208 des Verlängerungsmoduls 120 in Eingriff mit der Verdrehsicherungsnut 232 am Verdrehsicherungsabschnitt 230 des Sockelelements 228 des Fußmoduls 122 kommt, wodurch das Fußmodul 122 in einer vorgegebenen Winkelposition bezogen auf die gemeinsame Längsachse 126 des Verlängerungsmoduls 120 und des Fußmoduls 122 relativ zu dem Verlängerungsmodul 120 gesichert ist.

Der Verdrehsicherungszapfen 248 des Verlängerungsmoduls 120 und die Verdrehsicherungsnut 232 des Fußmoduls 122 bilden somit zusammen eine Verdrehsicherung 250, mittels welcher das Fußmodul 122 in einer vorgegebenen Winkelposition relativ zu dem Verlängerungsmodul 120 sicherbar ist.

Anschließend wird die Überwurfmutter 120, beispielsweise mittels eines der Hakenschlüsselbereiche 166a oder 166b des Multifunktionswerkzeugs 158, so um die Längsachse 126 des Verlängerungsmoduls 120 gedreht, dass deren Innengewinde 236 in Eingriff mit dem Außengewinde 238 des Gewindeabschnitts 234 des Sockelelements 228 des Fußmoduls 122 kommt.

Das Außengewinde 238 des Fußmoduls 122 und die Überwurfmutter 210 des Verlängerungsmoduls 120 bilden somit zusammen eine Schraubverbindung 252, mittels welcher das Fußmodul 122 mit dem Verlängerungsmodul 120 verschraubbar ist.

Diese Schraubverbindung 252 zwischen dem Fußmodul 122 und dem Verlängerungsmodul 120 ist kompatibel mit der Schraubverbindung 192 zwischen dem Verlängerungsmodul 120 und dem Abstützmodul 118 ausgebildet, so dass das Fußmodul 122 alternativ auch direkt mit dem Abstützmodul 118 verschraubbar ist.

Ebenso ist die Verdrehsicherung 250 zwischen dem Fußmodul 122 und dem Verlängerungsmodul 120 vorzugsweise kompatibel mit der Verdrehsicherung 182 zwischen dem Verlängerungsmodul 120 und dem Abstützmodul 118 ausgebildet, so dass das Fußmodul 122 auch direkt an dem Abstützmodul 118 in einer vorgegebenen Winkelposition bezüglich der Längsachse 126 relativ zu dem Abstützmodul 118 sicherbar ist.

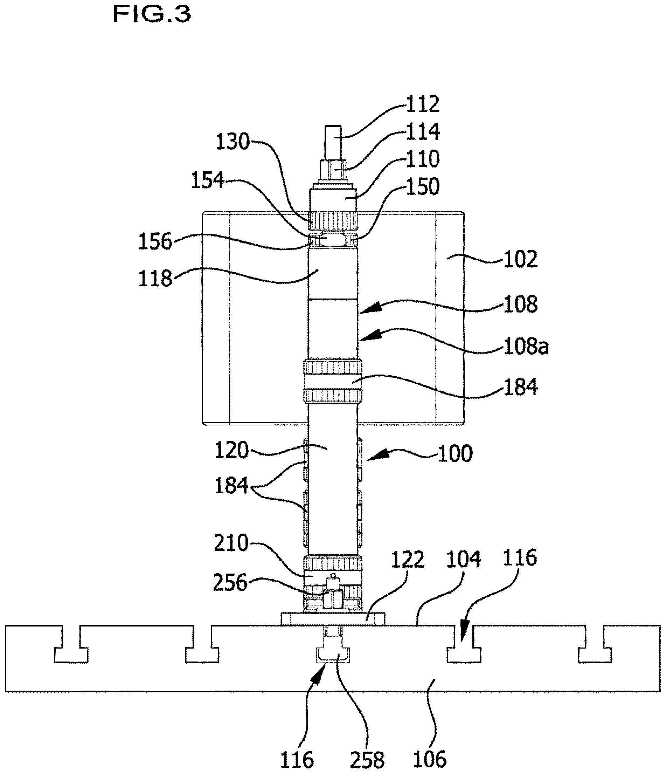

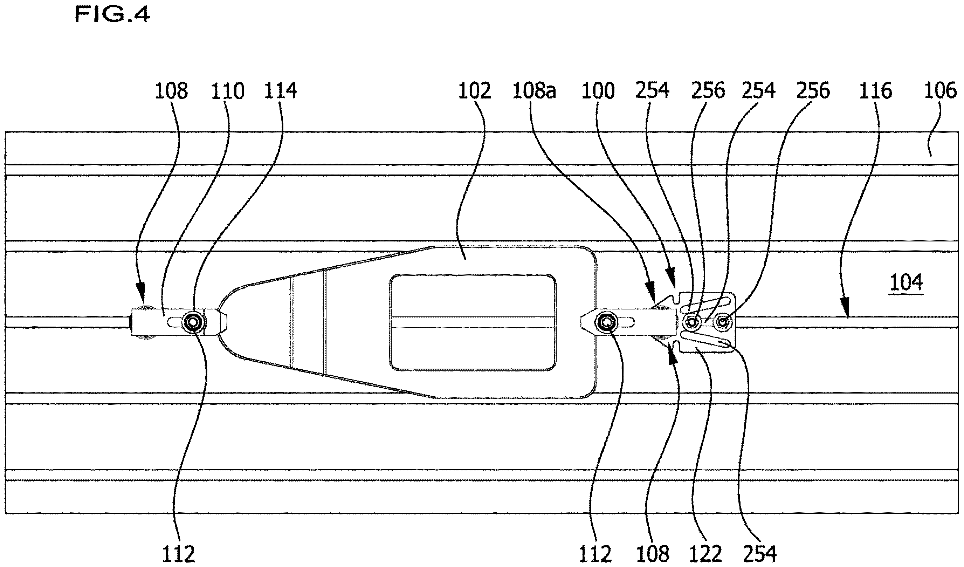

Wie am besten aus den Fig. 2, 4, 13 und 15 zu ersehen ist, weist die Basisplatte 226 des Fußmoduls 122 eine oder mehrere Montage-Durchtrittsöffnungen 254 auf, durch welche sich jeweils eine oder mehrere Montagemittel 256 (siehe die Fig. 2 und 4) bis in ein Gewinde eines jeweils zugeordneten T-Nutensteins 258 (siehe Fig. 3), welcher in einer der T-Nuten 116 des Aufspannkörpers 106 angeordnet ist, hinein erstrecken können, um so die Basisplatte 226 und damit das Fußmodul 122 lösbar an dem Aufspannkörper 106 zu montieren.

Jedes der Montagemittel 256 kann beispielsweise einen Gewindebolzen, eine Mutter und eine Unterlegscheibe oder eine Montageschraube umfassen.

Jede der Montage-Durchtrittsöffnungen 254 ist vorzugsweise als ein Langloch 260 ausgebildet.

Wenn mehrere Montage-Durchtrittsöffnungen 254 als Langlöcher 260 ausgebildet sind, so erstrecken sich diese vorzugsweise längs divergierender Längsrichtungen 262.

Insbesondere kann vorgesehen sein, dass die Abstände zwischen einander benachbarten Montage-Durchtrittsöffnungen 254 mit wachsendem Abstand von dem Sockelelement 228 des Fußmoduls 122 größer werden.

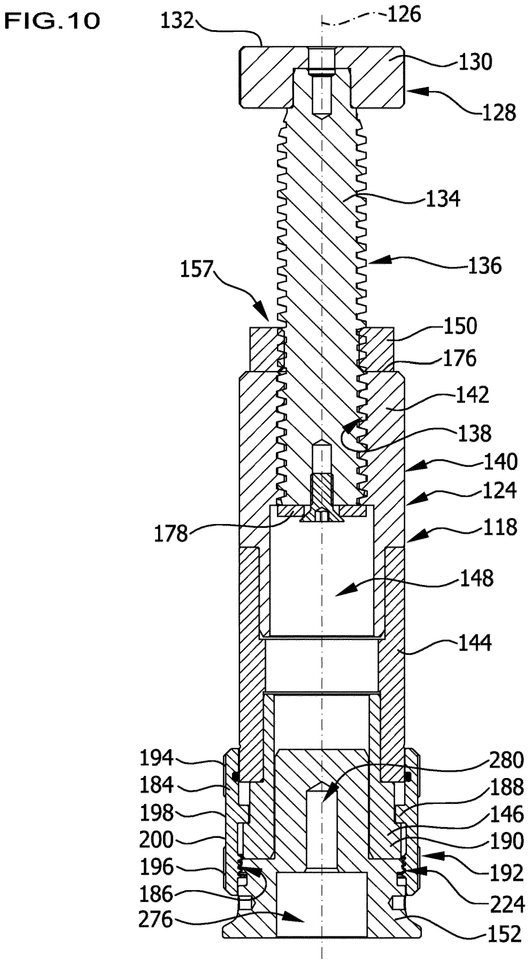

In der in den Fig. 8 bis 10 dargestellten Konfiguration ist das Abstützmodul 118 ohne Zwischenschaltung eines Verlängerungsmoduls 120 unmittelbar mit einem Sockelelement 152 verbunden, das vorzugsweise genau so ausgebildet ist wie das Sockelelement 228 des vorstehend beschriebenen Fußmoduls 122, was aufgrund der Kompatibilität zwischen den vorstehend beschriebenen Schraubverbindungen 192 und 252 sowie zwischen den vorstehend beschriebenen Verdrehsicherungen 182 und 250 ohne weiteres möglich ist.

Die in den Fig. 1 und 2 dargestellten Abstützböcke 108d und 108e weisen diesen in den Fig. 8 bis 10 dargestellten Aufbau auf, bei welchem ein Abstützmodul 118 direkt mit einem Sockelelement 152 kombiniert ist.

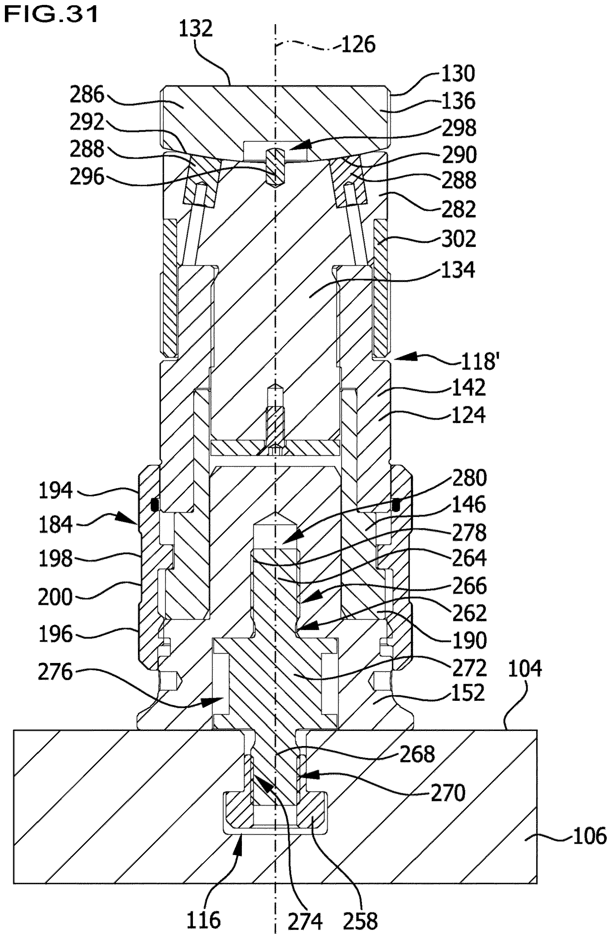

Die Montage der Abstützböcke 108d und 108e an dem Aufspannkörper 106 erfolgt dabei mittels eines Adapterelements 262, wie es in der Schnittdarstellung von Fig. 31 dargestellt ist.

Das Adapterelement 262 umfasst einen oberen Gewindeabschnitt 264, der mit einem Außengewinde 266 versehen ist, einen unteren Gewindeabschnitt 268, der mit einem Außengewinde 270 versehen ist, und einen den oberen Gewindeabschnitt 264 und den unteren Gewindeabschnitt 268 miteinander verbindenden Mittelabschnitt 272.

Im am Aufspannkörper 106 montierten Zustand steht das Außengewinde 270 des unteren Gewindeabschnitts 268 des Adapterelements 262 in Eingriff mit einem hierzu komplementär ausgebildeten Innengewinde 274 eines T-Nutensteins 258, der in einer T-Nut 116 des Aufspannkörpers 106 angeordnet ist.

In diesem montierten Zustand ist der Mittelabschnitt 272 des Adapterelements 262 in einem - vorzugsweise im Wesentlichen zylindrischen - Innenraum 276 des Sockelelements 152 aufgenommen.

Ferner steht in diesem montierten Zustand das Außengewinde 266 des oberen Gewindeabschnitts 264 in Eingriff mit einem Innengewinde 278 eines Gewindesacklochs 280, welches sich von dem Innenraum 276 des Sockelelements 152 aus nach oben erstreckt.

Mittels des Adapterelements 262 ist somit das Sockelelement 152 lösbar an dem Aufspannkörper 106 montiert.

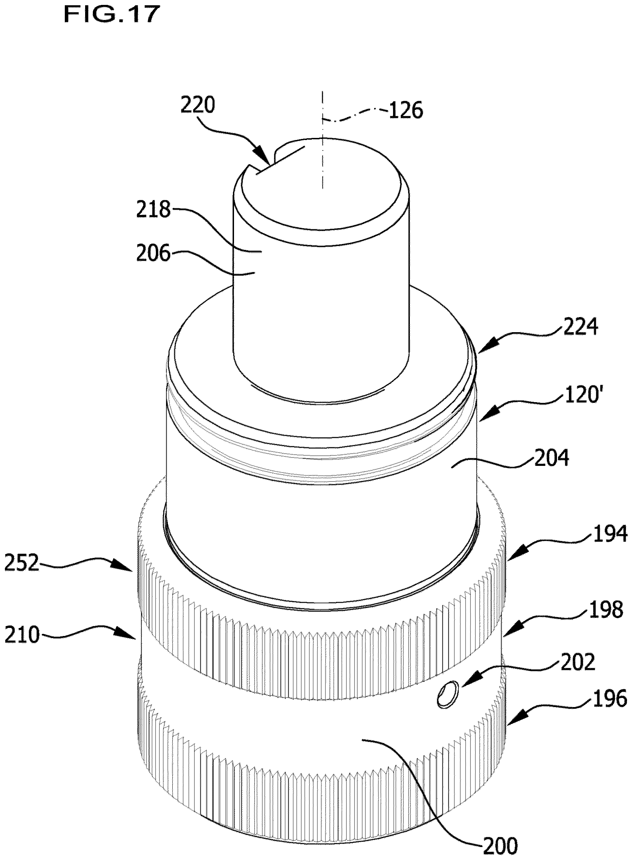

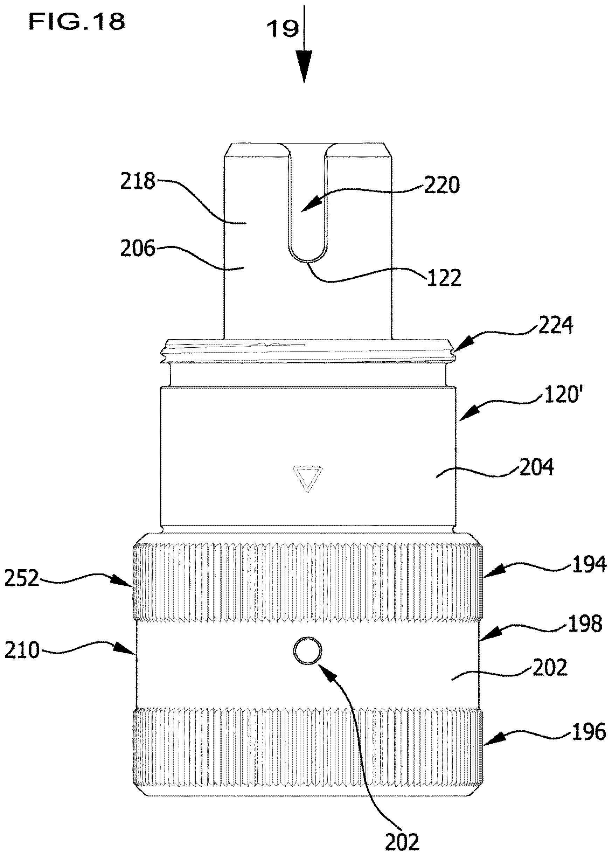

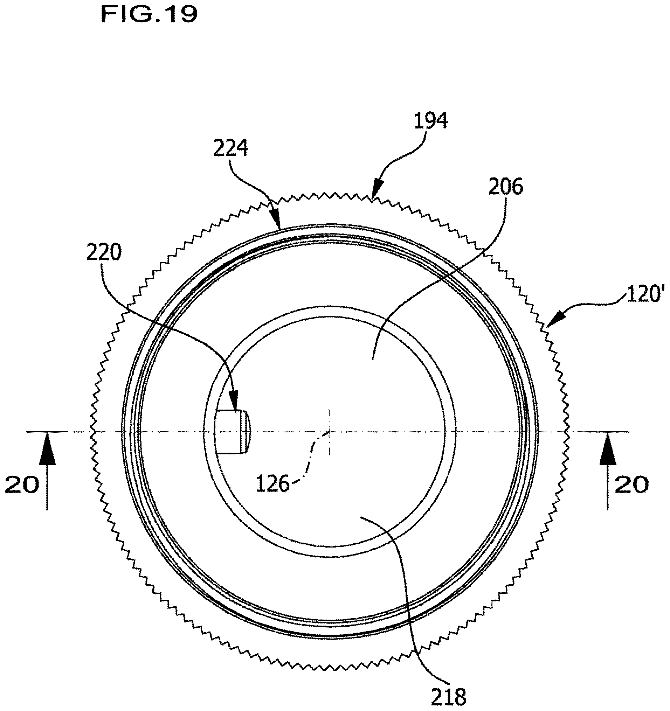

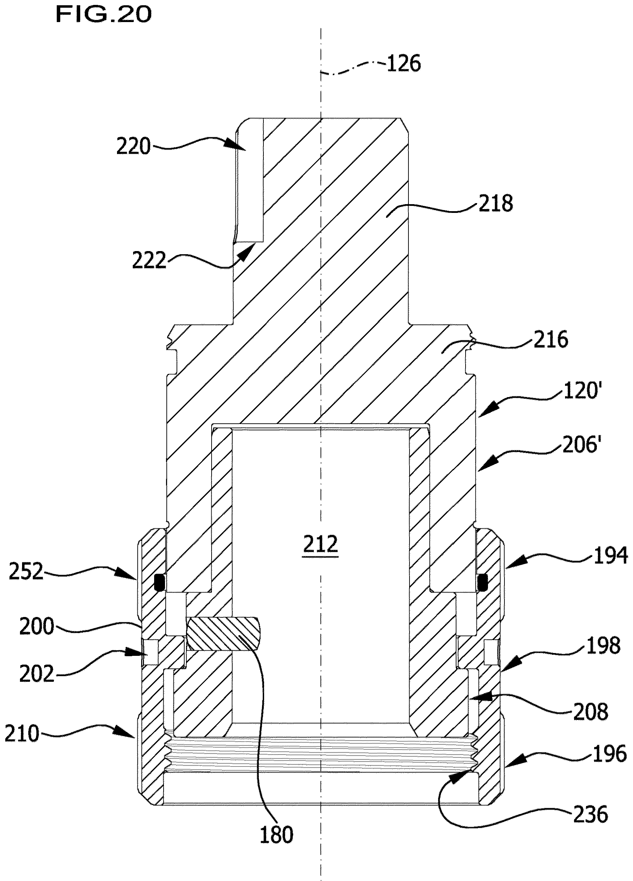

Der in den Fig. 1 und 2 dargestellte Abstützbock 108c der Spannanordnung 100 unterscheidet sich von dem vorstehend beschriebenen Abstützbock 108a dadurch, dass das vorstehend beschriebene Verlängerungsmodul 120 durch ein kürzeres Verlängerungsmodul 120' ersetzt ist, welches in den Fig. 17 bis 20 einzeln dargestellt ist.

Dieses kurze Verlängerungsmodul 120' unterscheidet sich von dem vorstehend beschriebenen langen Verlängerungsmodul 120 dadurch, dass das Hülsenteil 204 fehlt und stattdessen das Unterteil 208 des kurzen Verlängerungsmoduls 120' direkt mit einem modifizierten Kopplungsteil 206' des Verlängerungsmoduls 120' verbunden ist.

Diese Verbindung kann beispielsweise durch Verpressung, durch Verklebung, durch Verschweißung oder durch Verlötung hergestellt sein.

Der Verdrehsicherungsabschnitt 218 und der Gewindeabschnitt 216 des modifizierten Kopplungsteils 206' sind genau so aufgebaut wie der Verdrehsicherungsabschnitt 218 beziehungsweise der Gewindeabschnitt 216 des Kopplungsteils 206 des langen Verlängerungsmoduls 120, so dass die Verdrehsicherung 182 und die Schraubverbindung 192 des kurzen Verlängerungsmoduls 120' kompatibel sind mit der Verdrehsicherung 182 beziehungsweise mit der Schraubverbindung 192 des langen Verlängerungsmoduls 120.

Das Unterteil 208 des kurzen Verlängerungsmoduls 120' ist genau so ausgebildet wie das Unterteil 208 des langen Verlängerungsmoduls 120.

Die Überwurfmutter 210 des kurzen Verlängerungsmoduls 120' ist genau so ausgebildet wie die Überwurfmutter 210 des langen Verlängerungsmoduls 120.

Im Übrigen stimmt die in den Fig. 17 bis 20 dargestellte kurze Ausführungsform 120' des Verlängerungsmoduls hinsichtlich Aufbau, Funktion und Herstellungsweise mit der in den Fig. 11 und 12 dargestellten langen Ausführungsform 120 des Verlängerungsmoduls überein, auf deren vorstehende Beschreibung insoweit Bezug genommen wird.

Der in den Fig. 1 und 2 dargestellte Abstützbock 108b ist aus einem Abstützmodul 118 und zwei übereinander montierten kurzen Verlängerungsmodulen 120' zusammengesetzt.

Die Montage dieses Abstützbocks 108b an dem Aufspannkörper 106 erfolgt wie bei den Abstützbocken 108d und 108e mittels jeweils eines Sockelelements 152, das an dem unteren kurzen Verlängerungsmodul 120' montiert ist, und eines Adapterelements 262, welches das Sockelelement 152 mit einem in einer T-Nut 116 des Aufspannkörpers 106 angeordneten T-Nutenstein 258 verbindet.

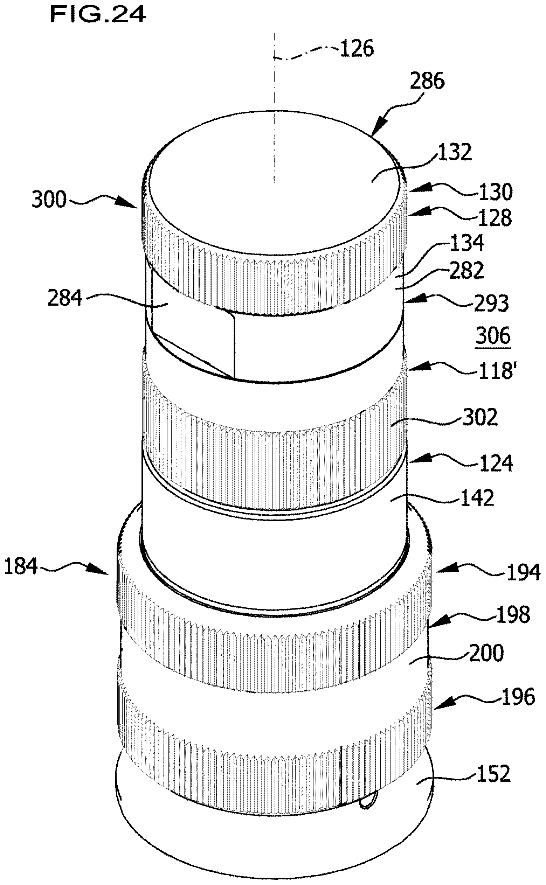

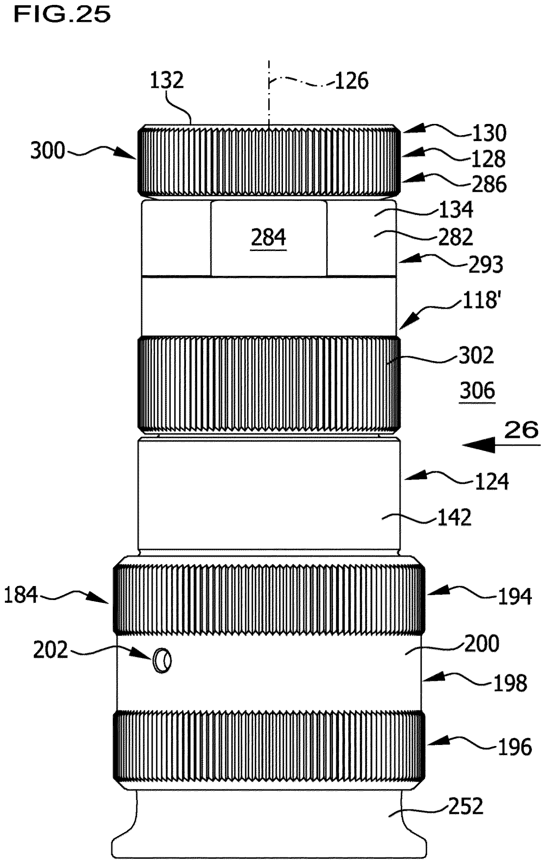

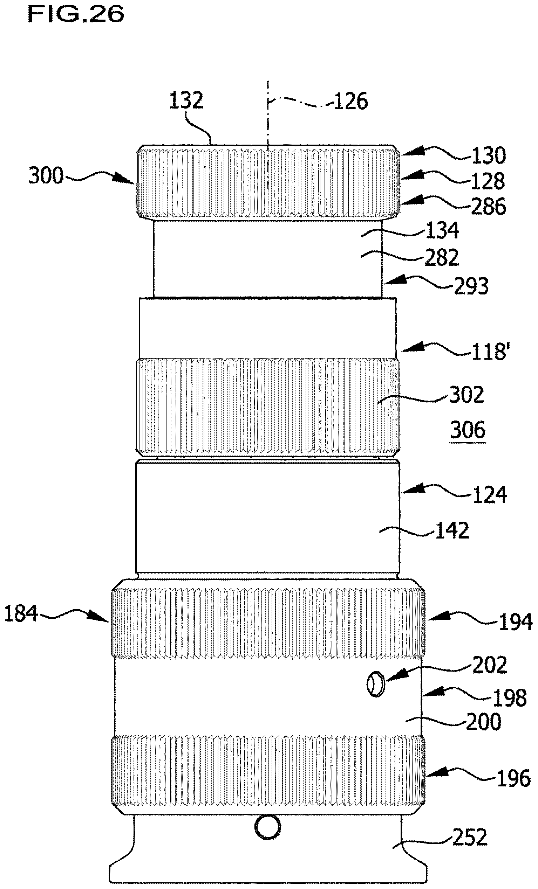

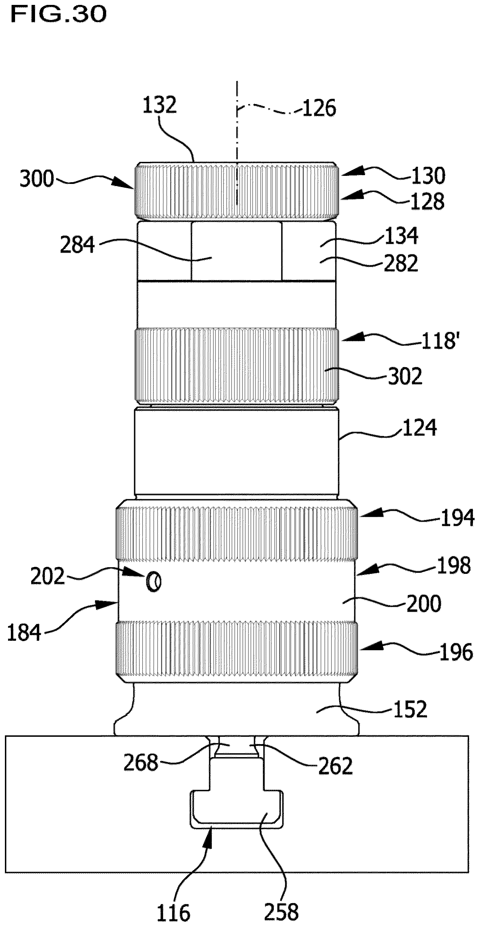

Eine in den Fig. 24 bis 31 dargestellte zweite Ausführungsform eines Abstützmoduls, welche im Folgenden als Abstützmodul 118' bezeichnet wird, unterscheidet sich von dem vorstehend beschriebenen Abstützmodul 118 dadurch, dass das Außengewinde 136 der Gewindespindel 134 und das Innengewinde 138 des Basisteils 124 des Abstützmoduls 118' nicht als ein Trapezgewinde, sondern vorzugsweise als ein Feingewinde, insbesondere als ein metrisches ISO-Feingewinde nach der Norm DIN 13-2 vom November 1999, ausgebildet sind.

Durch die Ausbildung dieser Gewinde als Feingewinde ist auch unter Belastung des Abstützmoduls 118' eine präzise Höhenverstellung des Kopfteils 128 relativ zu dem Basisteil 124 des Abstützmoduls 118' möglich.

Vorzugsweise beträgt die Steigung des Außengewindes 136 der Gewindespindel 134 und/oder die Steigung des Innengewindes 138 des Basisteils 124 höchstens 4 mm, insbesondere höchstens 3 mm, besonders bevorzugt höchstens 2 mm.

Ein Feingewinde bietet den weiteren Vorteil, dass es einen großen Kerndurchmesser aufweist, wodurch das mit dem Feingewinde versehene Bauteil, insbesondere die Gewindespindel 134, durch die Erzeugung des Feingewindes wenig geschwächt wird und somit eine große mechanische Stabilität aufweist.

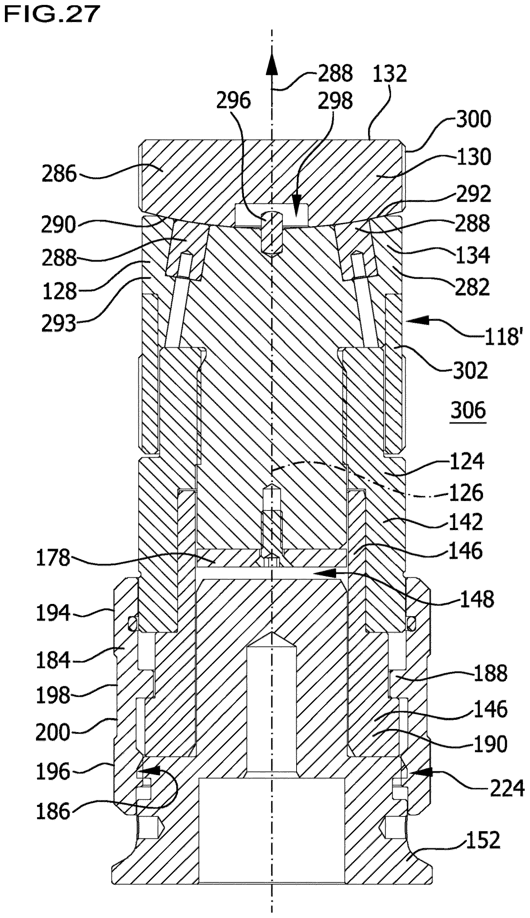

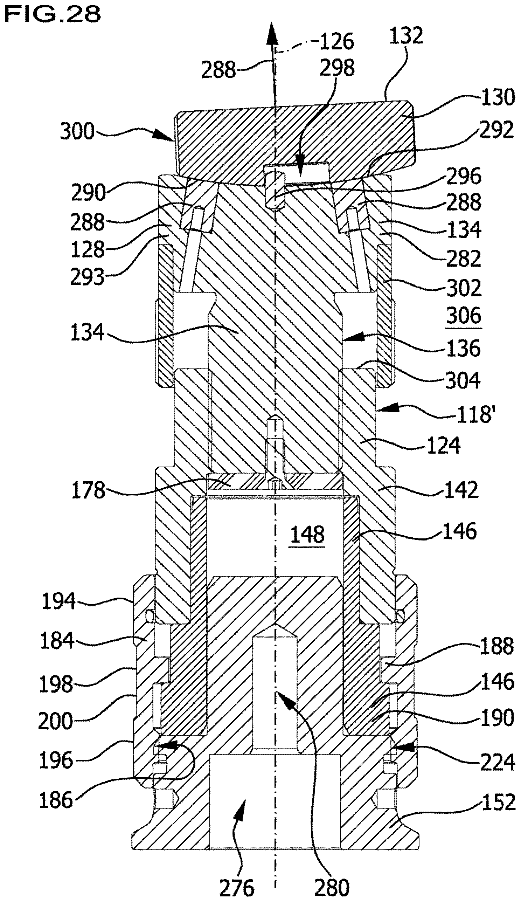

Wie am besten aus den Schnittdarstellungen der Fig. 27 und 28 zu ersehen ist, umfasst das Abstützmodul 118' im Gegensatz zum vorstehend beschriebenen Abstützmodul 118 keine Kontermutter 150.

Eine solche Kontermutter 150 ist aufgrund der Verwendung eines Feingewindes nicht erforderlich.

Um die Gewindespindel 134 bei dieser Ausführungsform leicht um die Längsachse 126 des Abstützmoduls 118 drehen zu können, weist die Gewindespindel 134 bei dieser Ausführungsform einen verdickten oberen Endbereich 282 auf, welcher an seinem äußeren Umfang mit zwei im Wesentlichen ebenen Betätigungsflächen 284 versehen ist, die einander diametral gegenüberliegen und im Wesentlichen parallel zueinander ausgerichtet sind, so dass der obere Endbereich 282 der Gewindespindel 134 als ein Zweiflach ausgebildet ist.

Der Abstand zwischen den beiden Betätigungsflächen 284 der Gewindespindel 134 entspricht dem Abstand a der Backen 164 des Gabelschlüsselbereichs 162 des Multifunktionswerkzeugs 158 (siehe Fig. 22), so dass die Gewindespindel 134 bei dieser Ausführungsform mittels des an den Betätigungsflächen 284 angelegten Gabelschlüsselbereichs 162 des Multifunktionswerkzeugs 158 um die Längsachse 126 des Abstützmoduls 118' drehbar ist.

Das Auflageelement 130, auf dessen Auflagefläche 132 das einzuspannende Werkstück 102 oder ein Spannelement 110 auflegbar ist, ist bei dieser Ausführungsform nicht starr an der Gewindespindel 134 befestigt, sondern als ein Winkelausgleichselement 286 ausgebildet, welches relativ zu der Längsachse 126 des Abstützmoduls 118' aus der in Fig. 27 dargestellten Ausgangsposition in die in Fig. 28 dargestellte Winkelausgleichsposition verschwenkbar ist, in welcher die Normalenrichtung 288 der Auflagefläche 132 gegenüber der Längsachse 126 geneigt ist.

Hierdurch ist es möglich, Abweichungen der Auflegeflächen eines einzuspannenden Werkstücks 102 oder eines Spannelements 110 von einer zu der Spannfläche 104 des Aufspannkörpers 106 parallelen Ausrichtung mittels einer Verschwenkung des Winkelausgleichselements 286 auszugleichen.

Das Winkelausgleichselement 286 ist beispielsweise kraftschlüssig, insbesondere durch eine magnetische Haltekraft, an der als Winkelausgleichselementträger 293 dienenden Gewindespindel 134 gehalten.

Die magnetische Haltekraft kann beispielsweise mittels eines oder mehrerer Magnetelemente 288 erzeugt werden, die an der dem Winkelausgleichselement 286 zugewandten Oberseite der Gewindespindel 134 angeordnet sind.

Alternativ oder ergänzend hierzu könnte auch vorgesehen sein, dass ein oder mehrere Magnetelemente an dem Winkelausgleichselement 286 angeordnet sind.

Die Magnetelemente 288 sind vorzugsweise als Dauermagnete ausgebildet.

Die der Gewindespindel 134 zugewandte Unterseite 290 des Winkelausgleichselements 286 ist vorzugsweise im Wesentlichen sphärisch gekrümmt ausgebildet, und die dem Winkelausgleichselement 286 zugewandte Oberseite 292 der Gewindespindel 134 ist vorzugsweise komplementär zu der sphärischen Unterseite 290 des Winkelausgleichselements 286 ausgebildet, um eine Verschwenkung des Winkelausgleichselements 286 relativ zur Längsachse 126 des Abstützmoduls 118' zu ermöglichen.

Wie am besten aus Fig. 28 zu ersehen ist, ist die Auslenkung des Winkelausgleichselements 290 aus der in Fig. 27 dargestellten Ausgangsposition durch ein Anschlagelement 294 begrenzt, welches beispielsweise als eine Madenschraube 296 ausgebildet sein kann, deren Längsachse parallel zur Längsachse 126 des Abstützmoduls 118' ausgerichtet und die in ein Gewindesackloch an der Oberseite 292 der Gewindespindel 134 eingedreht ist.

Das Anschlagelement 294 greift in eine Ausnehmung 298 an der Unterseite 290 des Winkelausgleichselements 286 ein, deren Ausdehnung den maximalen Winkel bestimmt, um welchen das Winkelausgleichselement 286 aus der in Fig. 27 dargestellten Ausgangsposition auslenkbar ist.

An seinem äußeren Umfang kann das Winkelausgleichselement 286 mit einer Riffelung 300 versehen sein, um die Handhabung des Winkelausgleichselements 286 zu erleichtern.

Ferner ist die Gewindespindel 134 des Abstützmoduls 118' mit einer Abdeckhülse 302 versehen, welche sich von dem oberen Endbereich 282 der Gewindespindel 134 nach unten erstreckt und in jeder Höhenposition des aus der Gewindespindel 134 und dem Winkelausgleichselement 286 gebildeten Kopfteils 128 des Abstützmoduls 118' relativ zu dem Basisteil 124 des Abstützmoduls 118' den Zwischenraum zwischen dem oberen Endbereich 282 der Gewindespindel 134 einerseits und einem oberen Rand 304 des Basisteils 124 andererseits abdeckt, so dass keine Verunreinigungen, insbesondere keine Späne oder flüssige Verunreinigungen wie Schmierstoffe oder Kühlstoffe, aus einem Außenraum 306 des Abstützmoduls 118' zu dem Außengewinde 136 der Gewindespindel 134 gelangen können.

Ein unterer Endbereich 308 der Abdeckhülse 302 gleitet bei einer Höhenverstellung des Kopfteils 128 relativ zu dem Basisteil 124 an dem äußeren Umfang des Basisteils 124 ab.

Ferner unterscheidet sich das Abstützmodul 118' von dem vorstehend beschriebenen Abstützmodul 118 dadurch, dass das Basisteil 124 kein Zwischenteil 144 umfasst, sondern stattdessen das Unterteil 146, welches vorzugsweise genau so ausgebildet ist wie das Unterteil 146 des Basisteils 124 des Abstützmoduls 118, direkt mit dem Oberteil 142 des Basisteils 124 des Abstützmoduls 118' verbunden ist.

Diese Verbindung kann beispielsweise durch Verpressung, durch Verklebung, durch Verschweißung oder durch Verlötung hergestellt sein.

In den Fig. 24 bis 28 ist die zweite Ausführungsform 128' eines Abstützmoduls in Kombination mit einem Sockelelement 152 dargestellt.

Das Abstützmodul 118' kann aber genau so wie das Abstützmodul 118 mit einem oder mit mehreren der Verlängerungsmodule 120 oder 120' und/oder mit einem Fußmodul 122 kombiniert werden, um einen Abstützbock 108 zu bilden.

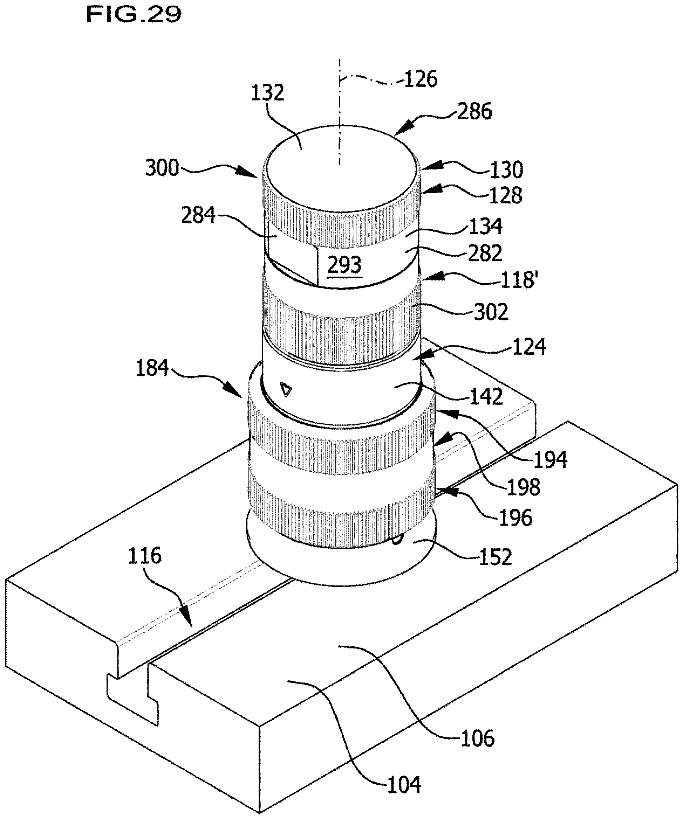

In den Fig. 29 bis 31 ist dargestellt, wie das Abstützmodul 118' mittels des Sockelelements 152 und eines in Eingriff mit dem Sockelelement 152 stehenden Adapterelements 262 mit einem in einer T-Nut 116 eines Aufspannkörpers 106 angeordneten T-Nutenstein 258 koppelbar und hierdurch lösbar an dem Aufspannkörper 106 festlegbar ist, so wie dies vorstehend im Zusammenhang mit der ersten Ausführungsform 118 des Abstützmoduls beschrieben worden ist.

Im Übrigen stimmt die zweite Ausführungsform 118' hinsichtlich Aufbau, Funktion und Herstellungsweise mit der ersten Ausführungsform 118 des Abstützmoduls überein, auf deren vorstehende Beschreibung insoweit Bezug genommen wird.

## Patentansprüche

1. Modularer Abstützbock, umfassend
ein Abstützmodul (118; 118'), das ein Basisteil (124) und ein relativ zu dem Basisteil (124) höhenverstellbares Kopfteil (128) umfasst, und
ein Verlängerungsmodul (120; 120'), auf welches das Abstützmodul (118; 118') aufsetzbar ist,
wobei eine Verdrehsicherung (182) vorgesehen ist, mittels welcher das Verlängerungsmodul (120; 120') in einer vorgegebenen Winkelposition in Bezug auf eine Längsachse (126) des Abstützbocks (108) relativ zu dem Abstützmodul (118; 118') sicherbar ist und
wobei eine Schraubverbindung (192) vorgesehen ist, mittels welcher das Verlängerungsmodul (120; 120') mit dem Abstützmodul (118; 118') verschraubbar ist,
**dadurch gekennzeichnet,**
**dass** die Schraubverbindung (192) ein Außengewinde (224) und eine Überwurfmutter (184) umfasst.

2. Modularer Abstützbock nach Anspruch 1, **dadurch gekennzeichnet, dass** die Verdrehsicherung (182) eine Verdrehsicherungsnut (220) und einen mit der Verdrehsicherungsnut (220) in Eingriff bringbaren Verdrehsicherungszapfen (180) umfasst.

3. Modularer Abstützbock nach Anspruch 2, **dadurch gekennzeichnet, dass** die Verdrehsicherungsnut (220) an dem Verlängerungsmodul (120; 120') angeordnet ist und der Verdrehsicherungszapfen (180) an dem Abstützmodul (118; 118') angeordnet ist.

4. Modularer Abstützbock nach einem der Ansprüche 1 bis 3, **dadurch gekennzeichnet, dass** eine weitere Verdrehsicherung (250) vorgesehen ist, mittels welcher ein weiteres Verlängerungsmodul (120; 120'), ein Fußmodul (122) oder ein Sockelelement (152) in einer vorgegebenen Winkelposition in Bezug auf die Längsachse (126) des Abstützbocks (108) relativ zu dem Verlängerungsmodul (120; 120') sicherbar ist.

5. Modularer Abstützbock nach Anspruch 4, **dadurch gekennzeichnet, dass** die weitere Verdrehsicherung (250) kompatibel mit der ersten Verdrehsicherung (182) ausgebildet ist, so dass das weitere Verlängerungsmodul (120; 120'), das Fußmodul (122) oder das Sockelelement (152) in einer vorgegebenen Winkelposition in Bezug auf die Längsachse (126) des Abstützbocks (108) relativ zu dem Abstützmodul (118; 118') direkt an dem Abstützmodul (118; 118') sicherbar ist.

6. Modularer Abstützbock nach einem der Ansprüche 1 bis 5, **dadurch gekennzeichnet, dass** das Außengewinde (224) an dem Verlängerungsmodul (120; 120') und die Überwurfmutter (184) an dem Abstützmodul (118; 118') angeordnet ist.

7. Modularer Abstützbock nach einem der Ansprüche 1 bis 6, **dadurch gekennzeichnet, dass** eine weitere Schraubverbindung (252) vorgesehen ist, mittels welcher ein weiteres Verlängerungsmodul (120; 120'), ein Fußmodul (122) oder ein Sockelelement (152) mit dem Verlängerungsmodul (120; 120') verschraubbar ist.

8. Modularer Abstützbock nach Anspruch 7, **dadurch gekennzeichnet, dass** die weitere Schraubverbindung (252) kompatibel mit der ersten Schraubverbindung (192) ausgebildet ist, so dass das weitere Verlängerungsmodul (120; 120'), das Fußmodul (122) oder das Sockelelement (152) direkt mit dem Abstützmodul (118; 118') verschraubbar ist.

9. Modularer Abstützbock nach einem der Ansprüche 1 bis 8, **dadurch gekennzeichnet, dass** das Abstützmodul (118; 118') eine Höhenverstellungseinrichtung (157) für das Kopfteil (128) umfasst, wobei die Höhenverstellungseinrichtung (157) eine Gewindespindel (134) und ein Innengewinde (138) sowie optional eine Kontermutter (150) umfasst.

10. Modularer Abstützbock nach Anspruch 9, **dadurch gekennzeichnet, dass** die Gewindespindel (134) ein Trapezgewinde aufweist.

11. Modularer Abstützbock nach Anspruch 9, **dadurch gekennzeichnet, dass** die Gewindespindel (134) ein Feingewinde aufweist.

12. Modularer Abstützbock nach einem der Ansprüche 1 bis 11, **dadurch gekennzeichnet, dass** das Abstützmodul (118') ein relativ zu einer Längsachse (126) des Abstützmoduls (118') verschwenkbares Winkelausgleichselement (286) umfasst.

13. Modularer Abstützbock nach Anspruch 12, **dadurch gekennzeichnet, dass** das Abstützmodul (118') ein Magnetelement (288) umfasst, mittels welchem das Winkelausgleichselement (286) in verschiedenen Winkelpositionen bezüglich der Längsachse (126) des Abstützmoduls (118') an einem Winkelausgleichselementträger (293) des Abstützmoduls (118') gehalten ist.

## Claims

1. Modular support, comprising
a support module (118; 118'), which comprises a base part (124) and a head part (128) that is height-adjustable relative to the base part (124), and
an extension module (120; 120'), onto which the support module (118; 118') is able to be placed,
wherein an anti-rotation device (182) is provided, by means of which the extension module (120; 120') is securable relative to the support module (118; 118') in a predetermined angular position in relation to a longitudinal axis (126) of the support (108), and
wherein a screw connection (192) is provided, by means of which the extension module (120; 120') is screwable to the support module (118; 118'),
**characterized in that**
the screw connection (192) comprises an external thread (224) and a union nut (184).

2. Modular support in accordance with Claim 1, **characterized in that** the anti-rotation device (182) comprises an anti-rotation groove (220) and an anti-rotation pin (180) that is able to be brought into engagement with the anti-rotation groove (220).

3. Modular support in accordance with Claim 2, **characterized in that** the anti-rotation groove (220) is arranged on the extension module (120; 120') and the anti-rotation pin (180) is arranged on the support module (118; 118').

4. Modular support in accordance with any one of Claims 1 to 3, **characterized in that** a further anti-rotation device (250) is provided, by means of which a further extension module (120; 120'), a foot module (122), or a base element (152) is securable relative to the extension module (120; 120') in a predetermined angular position in relation to the longitudinal axis (126) of the support (108).

5. Modular support in accordance with Claim 4, **characterized in that** the further anti-rotation device (250) is configured to be compatible with the first anti-rotation device (182), such that the further extension module (120; 120'), the foot module (122), or the base element (152) is securable relative to the support module (118; 118') directly on the support module (118; 118') in a predetermined angular position in relation to the longitudinal axis (126) of the support (108).

6. Modular support in accordance with any one of Claims 1 to 5, **characterized in that** the external thread (224) is arranged on the extension module (120; 120') and the union nut (184) is arranged on the support module (118; 118').

7. Modular support in accordance with any one of Claims 1 to 6, **characterized in that** a further screw connection (252) is provided, by means of which a further extension module (120; 120'), a foot module (122), or a base element (152) is screwable to the extension module (120; 120').

8. Modular support in accordance with Claim 7, **characterized in that** the further screw connection (252) is configured to be compatible with the first screw connection (192), such that the further extension module (120; 120'), the foot module (122), or the base element (152) is screwable directly to the support module (118; 118').

9. Modular support in accordance with any one of Claims 1 to 8, **characterized in that** the support module (118; 118') comprises a height adjustment device (157) for the head part (128), wherein the height adjustment device (157) comprises a threaded spindle (134) and an internal thread (138) as well as optionally a locknut (150).

10. Modular support in accordance with Claim 9, **characterized in that** the threaded spindle (134) has a trapezoidal thread.

11. Modular support in accordance with Claim 9, **characterized in that** the threaded spindle (134) has a fine thread.

12. Modular support in accordance with any one of Claims 1 to 11, **characterized in that** the support module (118') comprises an angle compensation element (286) that is pivotable relative to a longitudinal axis (126) of the support module (118').

13. Modular support in accordance with Claim 12, **characterized in that** the support module (118') comprises a magnet element (288), by means of which the angle compensation element (286) is held on an angle compensation element support (293) of the support module (118') in different angular positions with respect to the longitudinal axis (126) of the support module (118').

## Revendications

1. Châssis de support modulaire comprenant
un module de support (118 ; 118'), qui comprend une partie de base (124) et une partie de tête (128) pouvant être ajustée en hauteur par rapport à la partie de base (124), et un module de prolongement (120 ; 120'), sur lequel le module de support (118 ; 118') peut être placé,
dans lequel un système de blocage anti-rotation (182) est prévu, au moyen duquel le module de prolongement (120 ; 120') peut être bloqué dans une position angulaire prédéfinie par rapport à un axe longitudinal (126) du châssis de support (108) par rapport au module de support (118 ; 118'), et
dans lequel une liaison par vissage (192) est prévue, au moyen de laquelle le module de prolongement (120 ; 120') peut être vissé au module de support (118 ; 118'),
**caractérisé en ce**
**que** la liaison par vissage (192) comprend un filetage extérieur (224) et un écrou d'accouplement (184).

2. Châssis de support modulaire selon la revendication 1, **caractérisé en ce que** le système de blocage anti-rotation (182) comprend une rainure de blocage anti-rotation (220) et un tourillon de blocage anti-rotation (180) pouvant être amené en prise avec la rainure de blocage anti-rotation (220).

3. Châssis de support modulaire selon la revendication 2, **caractérisé en ce que** la rainure de blocage anti-rotation (220) est disposée sur le module de prolongement (120 ; 120') et le tourillon de blocage anti-rotation (180) est disposé sur le module de support (118 ; 118').

4. Châssis de support modulaire selon l'une quelconque des revendications 1 à 3, **caractérisé en ce qu'**un autre système de blocage anti-rotation (250) est prévu, au moyen duquel un autre module de prolongement (120 ; 120'), un module de pied (122) ou un élément formant socle (152) peut être bloqué, dans une position angulaire prédéfinie, par rapport à l'axe longitudinal (126) du châssis de support (108) par rapport au module de prolongement (120 ; 120').

5. Châssis de support modulaire selon la revendication 4, **caractérisé en ce que** l'autre système de blocage anti-rotation (250) est réalisé de manière compatible avec le premier système de blocage anti-rotation (182) de telle sorte que l'autre module de prolongement (120 ; 120'), le module de pied (122) ou l'élément formant socle (152) peut être bloqué directement sur le module de support (118 ; 118') par rapport au module de support (118 ; 118') dans une position angulaire prédéfinie par rapport à l'axe longitudinal (126) du châssis de support (108).

6. Châssis de support modulaire selon l'une quelconque des revendications 1 à 5, **caractérisé en ce que** le filetage extérieur (224) est disposé sur le module de prolongement (120 ; 120') et l'écrou d'accouplement (184) est disposé sur le module de support (118 ; 118').

7. Châssis de support modulaire selon l'une quelconque des revendications 1 à 6, **caractérisé en ce qu'**une autre liaison par vissage (252) est prévue, au moyen de laquelle un autre module de prolongement (120 ; 120'), un module de pied (122) ou un élément formant socle (152) peut être vissé au module de prolongement (120 ; 120') .

8. Châssis de support modulaire selon la revendication 7, **caractérisé en ce que** l'autre liaison par vissage (252) est réalisée de manière compatible avec la première liaison par vissage (192) de telle sorte que l'autre module de prolongement (120 ; 120'), le module de pied (122) ou l'élément formant socle (152) peut être vissé directement au module de support (118 ; 118').

9. Châssis de support modulable selon l'une quelconque des revendications 1 à 8, **caractérisé en ce que** le module de support (118 ; 118') comprend un dispositif d'ajustement en hauteur (157) pour la partie de tête (128), dans lequel le dispositif d'ajustement en hauteur (157) comprend une broche filetée (134) et un filetage intérieur (138) ainsi qu'en option un contre-écrou (150).

10. Châssis de support modulaire selon la revendication 9, **caractérisé en ce que** la broche filetée (134) présente un filetage trapézoïdal.

11. Châssis de support modulaire selon la revendication 9, **caractérisé en ce que** la broche filetée (134) présente un filetage fin.

12. Châssis de support modulaire selon l'une quelconque des revendications 1 à 11, **caractérisé en ce que** le module de support (118') comprend un élément de compensation angulaire (286) pouvant être pivoté par rapport à un axe longitudinal (126) du module de support (118').

13. Châssis de support modulaire selon la revendication 12, **caractérisé en ce que** le module de support (118') comprend un élément magnétique (288), au moyen duquel l'élément de compensation angulaire (286) est maintenu sur un support d'élément de compensation angulaire (293) du module de support (118') dans différentes positions angulaires par rapport à l'axe longitudinal (126) du module de support (118').
